(19) Europäisches Patentamt
European Patent Office
Office européen des brevets

(11) EP 4 682 175 A1

(12) **EUROPEAN PATENT APPLICATION**
published in accordance with Art. 153(4) EPC

(43) Date of publication:
**21.01.2026 Bulletin 2026/04**

(21) Application number: **24770794.6**

(22) Date of filing: **08.03.2024**

(51) International Patent Classification (IPC):
***C08B 15/06*** *(2006.01)* ***D06M 13/328*** *(2006.01)*

(52) Cooperative Patent Classification (CPC):
**C08B 15/06; D06M 13/328; D06M 15/61**

(86) International application number:
**PCT/JP2024/009117**

(87) International publication number:
**WO 2024/190688 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.03.2023 JP 2023038489**

(71) Applicant: **Kao Corporation**
**Chuo-ku,**
**Tokyo 103-8210 (JP)**

(72) Inventors:
- **YOSHIKAWA, Yuki**
  **Wakayama 640-8580 (JP)**
- **YAMATO, Kyohei**
  **Wakayama 640-8580 (JP)**
- **YOSHIDA, Yutaka**
  **Wakayama 640-8580 (JP)**

(74) Representative: **Hoffmann Eitle**
**Patent- und Rechtsanwälte PartmbB**
**Arabellastraße 30**
**81925 München (DE)**

# (54) METHOD FOR PRODUCING MODIFIED CELLULOSE FIBER

(57) The present invention relates to a method of producing a modified cellulose fiber. According to the present invention, a method of producing a modified cellulose fiber includes a modifying step in which two or more kinds of amines having different molecular weight are amide bonded to anion-modified cellulose fiber can be provided, wherein an average fiber diameter of the anion-modified cellulose fiber is 1 μm or more and 100 μm or less, the method includes carrying out the following Step 1 and subsequently the following Step 2 in the modifying step: Step 1: an amine containing an amine having smallest molecular weight is amide bonded to an anion-modified cellulose fiber, and Step 2: after Step 1, an amine containing an amine having largest molecular weight is amide bonded to an anion-modified cellulose fiber.

EP 4 682 175 A1

## Description

### TECHNICAL FIELD

The present invention relates to a method of producing a modified cellulose fiber.

### BACKGROUND ART

Conventionally, plastic materials derived from limited resource petroleum have been widely used; however, in the recent years, techniques with less burdens on the environment have been spotlighted. In view of the technical background, materials using cellulose fibers, which are biomass existing in nature in large amounts have been remarked.

A modified cellulose fiber in which a modifying group is bonded to an anion-modified cellulose fiber having a chemically stable cellulose I crystalline structure via an amide bond is expected to exhibit excellent physical property as a filler to daily sundries, household electric appliance parts, automobile parts and the like.

For example, Patent Publication 1 has proposed that a fine cellulose fiber complex in which a polymer having ethylene oxide/propylene oxide copolymer moiety and the like is bonded to a fine cellulose fiber via an amide bond is used in order to improve transparency, heat resistance and mechanical strength of a resin composition.

Patent Publication 1: Japanese Patent Laid-Open No. 2015-143337

### SUMMARY OF THE INVENTION

The present invention relates to the following [1] to [15]:

[1] A method of producing a modified cellulose fiber including a modifying step in which two or more kinds of amines having different molecular weight are amide bonded to an anion-modified cellulose fiber, wherein:

an average fiber diameter of the anion-modified cellulose fiber is 1 μm or more and 100 μm or less,
the method comprising carrying out the following Step 1 and subsequently the following Step 2,

Step 1: an amine containing an amine having smallest molecular weight is amide bonded to an anion-modified cellulose fiber; and
Step 2: after Step 1, an amine containing an amine having largest molecular weight is amide bonded to an anion-modified cellulose fiber.

[2] The method of producing a modified cellulose fiber according to the above [1], wherein an average fiber length of the anion-modified cellulose fiber is 1 μm or more and 1,000 μm or less.
[3] The method of producing a modified cellulose fiber according to the above [1] or [2], wherein the anion-modified cellulose fiber has a carboxy group.
[4] The method of producing a modified cellulose fiber according to any one of the above [1] to [3], wherein the content of the anion-modified cellulose fiber in a reaction liquid at the beginning of the modifying step is 1% by mass or more in the step.
[5] The method of producing a modified cellulose fiber according to any one of the above [1] to [4], wherein the amine has one or more kinds of modifying groups selected from the group consisting of a hydrocarbon group and a polymer group.
[6] The method of producing a modified cellulose fiber according to any one of the above [1] to [5], wherein the molecular weight of the amine having smallest molecular weight is 20 or more and 2,000 or less.
[7] The method of producing a modified cellulose fiber according to any one of the above [1] to [6], wherein the molecular weight of the amine having largest molecular weight is 100 or more and 4,000 or less.
[8] The method of producing a modified cellulose fiber according to any one of the above [1] to [7], wherein a molecular weight ratio of the amine having largest molecular weight to the amine having smallest molecular weight (a molecular weight of an amine having largest molecular weight / a molecular weight of an amine having smallest molecular weight) is more than 1 and 100 or less.
[9] The method of producing a modified cellulose fiber according to any one of the above [5] to [8], wherein an introduction rate of the modifying group in the modified cellulose fiber is 40% by mol or more and 100% by mol or less.
[10] The method of producing a modified cellulose fiber according to any one of the above [5] to [9], wherein an introduction rate of a modifying group having smallest molecular weight which is introduced by a bond of the amine having smallest molecular weight in the modifying group introduced into the modified cellulose fiber is 10% by mol or more and 95% by mol or less.

[11] The method of producing a modified cellulose fiber according to any one of the above [1] to [10], wherein an amount of the amine in the Step 1 is 0.01 mol equivalent or more and 10 mol equivalent or less.

[12] The method of producing a modified cellulose fiber according to any one of the above [1] to [11], wherein an amount of the amine in the Step 2 is 0.01 mol equivalent or more and 10 mol equivalent or less.

[13] The method of producing a modified cellulose fiber according to any one of the above [5] to [12], wherein the polymer group is one or more kinds selected from the group consisting of a polyoxyalkylene structure and a polysiloxane structure.

[14] The method of producing a modified cellulose fiber according to any one of the above [5] to [13], wherein the polymer group is a structure represented by the following formula:

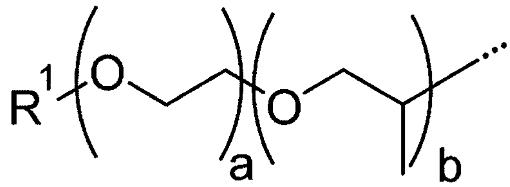

wherein $R^1$ represents a hydrogen atom, a hydrocarbon group having carbon atoms of 1 or more and 6 or less or $-CH_2CH(CH_3)NH_2$ group, EO and PO are present randomly or in a state of a block, a is a positive number showing an average number of moles of EO added, and b is a positive number showing an average number of moles of PO added.

[15] A method of producing a fine modified cellulose fiber including finely fibrillating the modified cellulose fiber obtained by the method as defined in any one of claims [1] to [14].

## DETAILED DESCRIPTION OF THE INVENTION

The present invention relates to a method of producing a novel modified cellulose fiber in which a modifying group is bonded to an anion-modified cellulose fiber via an amide bond in high yield, wherein the modified cellulose fiber has an excellent dispersibility upon finely fibrillating the resulting modified cellulose fiber.

According to the present invention, a method of producing a novel modified cellulose fiber in which a modifying group is bonded to an anion-modified cellulose fiber via an amide bond in high yield can be provided, wherein the modified cellulose fiber has an excellent dispersibility upon finely fibrillating the resulting modified cellulose fiber.

In Patent Publication 1, a modifying treatment (i.e. an amide bond treatment) was carried out for the fine anion-modified cellulose fiber finely fibrillated up to nanometer order.

As a result of studying production method of the modified cellulose fiber into which a modifying group is introduced by an amidation reaction, the present inventors newly found that an anion-modified cellulose fiber having higher concentration than that of the conventional one can be reacted without gelation by carrying out a modifying treatment with an anion-modified cellulose fiber having a specified average fiber diameter, and a modified cellulose fiber can be produced in high yield.

Further, the inventor newly found that in the case of the production method using an anion-modified cellulose fiber having a specified average fiber diameter, an amine having smaller molecular weight was previously reacted and next an amine having larger molecular weight was reacted, whereby subsequently a dispersibility of a finely modified cellulose fiber obtained by carrying out fine fibrillation treatment could be surprisingly improved.

Although the mechanism in which such an action and effect are exhibited is not definite, it is assumed that an amine having smaller molecular weight is evenly bonded to an anion-modified cellulose fiber, and wettability to a medium is improved, to loose the bonding between fibers of the anion-modified cellulose fiber. As a result, an amine having larger molecular weight effectively enters into an inner part of the anion-modified cellulose fiber and forms a bonding, and the reduction of aggregation force between fibers can be enhanced by the steric repulsion.

## 1. Production Method of Modified Cellulose Fiber

The production method of the modified cellulose fiber of the present invention is a method of producing a modified cellulose fiber including a modifying step in which two or more kinds of amines having different molecular weight are amide bonded to an anion-modified cellulose fiber, wherein:

an average fiber diameter of the anion-modified cellulose fiber is 1 μm or more and 100 μm or less, and
the method includes carrying out the following Step 1 and subsequently the following Step 2 in the modifying step:

Step 1: an amine containing an amine having smallest molecular weight is amide bonded to the anion-modified

cellulose fiber; and
Step 2: after Step 1, an amine containing an amine having largest molecular weight is amide bonded to the anion-modified cellulose fiber.

[Anion-modified cellulose fiber]

The anion-modified cellulose fiber used in the production method of the present invention is a cellulose fiber which is anionically modified to contain an anionic group in the cellulose fiber.

The average fiber diameter of the anion-modified cellulose fiber is 1 μm or more, preferably 5 μm or more, more preferably 10 μm or more, and even more preferably 20 μm or more from the viewpoint of efficiency of production, and the average fiber diameter is 100 μm or less, preferably 60 μm or less, and more preferably 40 μm or less from the same viewpoint. The average fiber diameter of the anion-modified cellulose fiber can be measured by the methods described in the Examples mentioned below.

The average fiber length of the anion-modified cellulose fiber is preferably 1 μm or more, more preferably 10 μm or more, even more preferably 50 μm or more, and even more preferably 100 μm or more from the viewpoint of efficiency of production, and on the other hand the average fiber length is preferably 1,000 μm or less, more preferably 500 μm or less, and even more preferably 400 μm or less from the same viewpoint. The average fiber length of the anion-modified cellulose fiber can be measured by the methods described in the Examples mentioned below.

In the present invention, it is preferred that a cellulose fiber and an anion-modified cellulose fiber which are raw materials are subjected to, for example, a heat degradation treatment, a biochemical treatment and/or a chemical treatment, to adjust the length to have the above average fiber length (referred to as also "shortening" herein). The heat degradation treatment includes, for example, a treatment stirring an aqueous suspension of the cellulose fiber under the temperature condition of preferably 50°C or more and preferably 230°C or less. The biochemical treatment is not particularly limited to an agent to be used, and, for example, includes a treatment using an enzyme such as endoglucanase, exoglucanase or beta-glucosidase. The chemical treatment is not particularly limited to an agent to be used, and, for example, includes an acid hydrolysis treatment with hydrochloride, sulfuric acid or the like, an oxygenation treatment with hydrogen peroxide, ozone or the like, an alkali hydrolysis treatment with an alkali such as sodium hydroxide treatment. As to the conditions of the alkali hydrolysis or acid hydrolysis, for example, paragraphs 0034 to 0035 of Japanese Patent Laid-Open No. 2019-119983 can be referred to.

The content of the anionic group in the anion-modified cellulose fiber is preferably 0.1 mmol/g or more, more preferably 0.6 mmol/g or more, even more preferably 0.8 mmol/g or more, and even more preferably 1.0 mmol/g or more, from the viewpoint of ensuring the stable dispersibility and predisposing to introduce a modifying group. From the same viewpoint, the upper limit is preferably 3.0 mmol/g or less, more preferably 2.5 mmol/g or less, and even more preferably 2.0 mmol/g or less. The content of the anionic group can be measured by the methods described in the Examples mentioned below.

Although the anionic group contained in the anion-modified cellulose fiber may include, for example, a sulfonic acid group, a phosphorous acid group and the like, the anionic group includes a carboxy group for introducing a modifying group into a cellulose fiber.

An ion pairing to an anionic group (counterion) in the anion-modified cellulose fiber includes, for example, a metal ion such as sodium ion, potassium ion, calcium ion and aluminum ion occurring in the presence of alkali at the time of production, a proton resulting from the substitution of these metal ions with acid, and the like.

The anion-modified cellulose fiber is preferably an oxidized cellulose fiber resulting from the oxidation of the hydroxy group in a cellulose constituting unit, and more preferably a cellulose fiber of which C6 position of the cellulose constituting unit is a carboxy group, from the viewpoint of introducing a modifying group.

The anion-modified cellulose fiber preferably has a cellulose I crystalline structure. The crystallinity of the anion-modified cellulose fiber is preferably 10% or more, more preferably 15% or more, and even more preferably 20% or more, from the viewpoint of exhibiting high mechanical physical properties of a resin composition when formulating into the resin composition as a filler. In addition, the crystallinity is preferably 90% or less, more preferably 85% or less, and even more preferably 80% or less, from the viewpoint of availability of raw materials. Incidentally, as used herein, the crystallinity of the various cellulose fibers is the cellulose I crystallinity calculated from the diffraction intensity according to X ray diffraction, and can be measured according to the methods described in the Examples mentioned later. Incidentally, the cellulose I refers to a crystalline form of a natural cellulose, and the cellulose I crystallinity means a proportion occupied by the crystalline region amount in the entity of the cellulose fiber. The presence or absence of the cellulose I crystalline structure can be determined by the fact that there is a peak at $2\theta = 22.6°$ in X ray diffraction measurement.

[Method of Preparing Anion-modified cellulose fiber]

The anion-modified cellulose fiber used in the production method of the present invention can be obtained by

providing oxidation treatment or addition treatment of an anionic group to a raw material cellulose fiber, introducing at least one or more anionic group to the cellulose fiber, and anionically modifying the cellulose fiber.

[Raw Material Cellulose Fiber]

It is preferred to use a natural cellulose fiber as a cellulose fiber which is a raw material of the anion-modified cellulose fiber, from the viewpoint of having cellulose I crystalline structure and the viewpoint of environmental burden. The natural cellulose fibers include, for example, those from wooden pulp such as pulp from needle-leaf trees and pulp from broad-leaf trees; cotton pulp from cotton linter and cotton lint; non-wooden pulp such as maize straw pulp and bagasse pulp; bacteria cellulose; and the like, and one or more kinds of those can be used in combination.

The average fiber diameter of raw material cellulose fiber is, for example, preferably 1 μm or more from the viewpoint of availability, and preferably 100 μm or less from the same viewpoint. The average fiber length is, for example, preferably 1,000 μm or more from the viewpoint of availability, and preferably 10,000 μm or less from the same viewpoint. The average fiber diameter and average fiber length of the raw material cellulose fiber can be measured by the methods described in the Examples mentioned below.

[Method of Introducing Anionic Group]

The method of introducing an anionic group into the cellulose fiber includes, for example, a method of oxidizing a hydroxy group of the cellulose fiber to convert into a carboxy group, a method of reacting a hydroxy group of the cellulose fiber with one or more kinds selected from the group consisting of a compound having an anionic group, an acid anhydride of the compound having an anionic group and derivatives thereof.

The method of subjecting a hydroxy group of the cellulose fiber to an oxidization treatment includes, for example, a method of reacting a raw material cellulose fiber with an oxidizing agent such as sodium hypochlorite and a bromide such as sodium bromide using 2,2,6,6-tetramethyl-1-piperidine-N-oxyl (TEMPO) as a catalyst, as described in Japanese Patent Laid-Open No. 2015-143336 or Japanese Patent Laid-Open No. 2015-143337. By subjecting the cellulose fibers to an oxidization treatment using TEMPO as a catalyst, a hydroxymethyl group ($-CH_2OH$) at C6 position of the cellulose constituting unit is selectively converted to a carboxy group. This method is particularly advantageous in the aspects that the selectivity of a hydroxy group at C6 position to be oxidized on the surface of the raw material cellulose fibers is excellent, and reaction conditions are mild.

The compounds having an anionic group for use in the introduction of an anionic group into a cellulose fiber specifically includes a halogenated acetic acid such as chloroacetic acid, acid anhydride of dicarboxylic acid compound such as maleic acid anhydride, succinic acid anhydride, phthalic acid anhydride and adipic acid anhydride. These compounds may be substituted with a hydrophobic group.

[Amine]

The amine as used herein is a compound having a modifying group and at least one amino group or imino group in the molecule.

[Modifying Group]

The modifying group includes (a) hydrocarbon group and (b) polymer group. Two or more kinds of amines having different molecular weight are bonded to the anion-modified cellulose fiber, whereby a modifying group owned by each amine is introduced into the anion-modified cellulose fiber, and a modified cellulose fiber having two or more modifying groups is synthesized. The combination of the two or more modifying groups may be a combination of two or more hydrocarbon groups, a combination of a hydrocarbon group and a polymer group, and a combination of two or more polymer groups, and a combination of a hydrocarbon group and a polymer group is preferred from the viewpoint of the dispersibility of the modified cellulose fiber.

As used herein, the molecular weight ratio of an amine having largest molecular weight to be bonded to the anion-modified cellulose to an amine having smallest molecular weight (molecular weight of an amine having largest molecular weight / molecular weight of an amine having smallest molecular weight) is preferably more than 1, more preferably 1.5 or more, and even more preferably 2 or more from the viewpoint of ensuring a chemical stability of the modified cellulose fiber and a dispersion stability as a filler. From the same viewpoint, the molecular weight ratio is preferably 100 or less, more preferably 50 or less, and even more preferably 20 or less.

The molecular weight of the amine having smallest molecular weight is preferably 20 or more, more preferably 50 or more, and even more preferably 80 or more, from the viewpoint of ensuring a chemical stability of the modified cellulose fiber and a dispersion stability as a filler. From the same viewpoint, the molecular weight is preferably 2,000 or less, more

preferably 1,000 or less, and even more preferably 300 or less. Provided that the amine has a polymer group, the molecular weight is an average molecular weight.

The molecular weight of the amine having largest molecular weight is preferably 100 or more, more preferably 200 or more, and even more preferably 1,000 or more, from the viewpoint of ensuring a chemical stability of the modified cellulose fiber and a dispersion stability as a filler. From the same viewpoint, the molecular weight is preferably 4,000 or less, more preferably 3,000 or less, and even more preferably 2,000 or less. Provided that the amine has a polymer group, the molecular weight is an average molecular weight.

(a) Hydrocarbon Group

The hydrocarbon group includes monovalent hydrocarbon group, for example, a straight or branched chain, saturated hydrocarbon group, a straight or branched chain, unsaturated hydrocarbon group, a cyclic saturated hydrocarbon group, an aryl group an aralkyl group, and the hydrocarbon group is preferably one or more kinds selected from the group consisting of a straight or branched chain, saturated hydrocarbon group and an aralkyl group, and even more preferably one or more kinds selected from the group consisting of a straight or branched chain alkyl group from the viewpoint of ensuring a chemical stability of the modified cellulose fiber and a dispersion stability as a filler.

The number of carbons of the hydrocarbon group is 1 or more, preferably 3 or more and more preferably 6 or more, and preferably 30 or less, more preferably 22 or less, even more preferably 18 or less and even more preferably 10 or less. The hydrocarbon group may have a substituent mentioned below, and a part of the hydrocarbon group may be substituted to a hydronitrogen group.

The straight or branched chain, saturated hydrocarbon group is preferably a straight chain, saturated hydrocarbon group, from the viewpoint of ensuring a chemical stability of the modified cellulose fiber and a dispersion stability as a filler.

The aralkyl group is preferably an alkyl group in which a hydrogen atom is substituted with a phenyl group from the viewpoint of ensuring a chemical stability of the modified cellulose fiber and a dispersion stability as a filler. Specifically, the aralkyl group includes a benzyl group and a phenethyl group.

(b) Polymer Group

The polymer group in the present invention is a functional group containing a polymer structure.

Formula weight (molecular weight) of the polymer group is preferably 100 or more, more preferably 200 or more, even more preferably 300 or more, even more preferably 500 or more, even more preferably 1,000 or more, and even more preferably 1,500 or more, from the viewpoint of ensuring a chemical stability of the modified cellulose fiber and a dispersion stability as a filler. From the same viewpoint, the formula weight is preferably 1,000,000 or less, more preferably 100,000 or less, even more preferably 10,000 or less, even more preferably 7,000 or less, even more preferably 5,000 or less, even more preferably 4,000 or less, even more preferably 3,500 or less, and even more preferably 2,500 or less.

The polymer group is preferably a functional group having a repeat structure linked by a structure having an oxygen atom, more preferably a functional group having a repeat structure linked by an oxygen atom, such as a polyoxyalkylene structure and a polysiloxane structure, more preferably a functional group having a polyoxyalkylene structure, and even more preferably an alkoxy polyoxyalkylene group, from the viewpoint of ensuring a chemical stability of the modified cellulose fiber and a dispersion stability as a filler.

The polyoxyalkylene structure is preferably a (co)polymer structure of one or more oxyalkylene selected from oxyalkylene having carbon atoms of 2 or more and 8 or less, more preferably a (co)polymer structure of one or more oxyalkylene selected from oxyalkylene having carbon atoms of from 2 or more and 4 or less, even more preferably a (co) polymer structure of one or more oxyalkylene selected from ethylene oxide (EO) and propylene oxide (PO), and even more preferably a copolymer structure in which ethylene oxide and propylene oxide are polymerized randomly or in a block state (EO/PO copolymer structure), from the viewpoint of ensuring a chemical stability of the modified cellulose fiber and a dispersion stability as a filler.

The copolymer structure in which ethylene oxide and propylene oxide are polymerized randomly or in a block state includes, for example, a structure represented by the following formula:

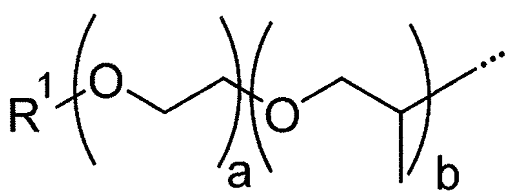

wherein $R^1$ represents a hydrogen atom, a hydrocarbon group having carbon atoms of 1 or more and 6 or less, or $-CH_2CH(CH_3)NH_2$ group, EO and PO are present randomly or in a block state, a is a positive number showing an average number of moles of EO added, and b is a positive number showing an average number of moles of PO added. The structure represented by the above formula is one preferred example of the polymer group.

$R^1$ is preferably a straight or branched chain alkyl group having carbon atoms of 1 or more and 6 or less, and more preferably a methyl group, from the viewpoint of ensuring a chemical stability of the modified cellulose fiber and a dispersion stability as a filler.

The a is preferably 1 or more, more preferably 3 or more, even more preferably 6 or more, even more preferably 11 or more, even more preferably 15 or more, even more preferably 20 or more, even more preferably 25 or more, and even more preferably 30 or more, from the viewpoint of ensuring a chemical stability of the modified cellulose fiber and a dispersion stability as a filler. From the same viewpoint, a is preferably 100 or less, more preferably 70 or less, even more preferably 60 or less, even more preferably 50 or less, and even more preferably 40 or less.

The b is preferably 1 or more, more preferably 3 or more, and even more preferably 5 or more, from the viewpoint of ensuring a chemical stability of the modified cellulose fiber and a dispersion stability as a filler. From the same viewpoint, b is preferably 50 or less, more preferably 40 or less, even more preferably 30 or less, even more preferably 25 or less, even more preferably 20 or less, even more preferably 15 or less, and even more preferably 10 or less.

The a + b in the above formula represents the average number of moles of total of EO and PO added, and is preferably 4 or more, more preferably 6 or more and even more preferably 8 or more, from the viewpoint of ensuring a chemical stability of the modified cellulose fiber and a dispersion stability as a filler, and preferably 100 or less and more preferably 70 or less, from the same viewpoint.

The content of PO in the EO/PO copolymer structure (% by mol) can be calculated based on the above a and b, and concretely can be obtained from $\mathbf{b} \times 100 / (\mathbf{a} + \mathbf{b})$. The content of PO is preferably 1% by mol or more, more preferably 5% by mol or more, even more preferably 7% by mol or more, even more preferably 10% by mol or more, and even more preferably 20% by mol or more, from the viewpoint of ensuring a chemical stability of the modified cellulose fiber and a dispersion stability as a filler. From the same viewpoint, the content is preferably 100% by mol or less, more preferably 90% by mol or less, even more preferably 85% by mol or less, even more preferably 75% by mol or less, even more preferably 60% by mol or less, even more preferably 50% by mol or less, even more preferably 40% by mol or less, and even more preferably 30% by mol or less.

(c) Further Substituent

Incidentally, the modifying group may have further substituents. The substituent includes, for example, alkoxy group having carbon atoms of from 1 to 6 such as methoxy group, ethoxy group, propoxy group, isopropoxy group, butoxy group, isobutoxy group, sec-butoxy group, tertbutoxy group, pentyloxy group, isopentyloxy group, and hexyloxy group; alkoxy-carbonyl group in which the number of the carbon atoms of alkoxy group is 1 or more and 6 or less such as methoxycarbonyl group, ethoxycarbonyl group, propoxycarbonyl group, isopropoxycarbonyl group, butoxycarbonyl group, isobutoxycarbonyl group, sec-butoxycarbonyl group, tert-butoxycarbonyl group, pentyloxycarbonyl group, isopentyloxycarbonyl group; halogen atom such as fluorine atom, chlorine atom, bromine atom, and iodine atom; acyl group having carbon atoms of 1 or more and 6 or less such as acetyl group and propionyl group; aralkyl group; aralkyloxy group; alkylamino group having carbon atoms of 1 or more and 6 or less; dialkylamino group in which the number of the carbon atoms of alkyl group is 1 or more and 6 or less; and hydroxy group.

[Specific Example of Amine]

The compound having a modifying group may be any of primary amine, secondary amine, or tertiary amine.

(a) Compound Having Hydrocarbon Group

The specific example of the compound having a hydrocarbon group includes a primary to tertiary amine such as, for example, ethylamine, diethylamine, triethylamine, propylamine, dipropylamine, butylamine, dibutylamine, hexylamine, 2-ethylhexylamine, dihexylamine, trihexylamine, octylamine, dioctylamine, trioctylamine, dodecylamine, didodecylamine, stearylamine, distearylamine, monoethanolamine, diethanolamine, triethanolamine, oleylamine, aniline, octadecylamine, dimethylbehenylamine, benzylamine, dibenzylamine, tritylamine, and naphthylamine.

A commercially available product can be used as a compound having hydrocarbon group, or the compound having hydrocarbon group can be prepared according to a known method.

(b) Compound Having Polymer Group

It is preferred that a polymer group and a nitrogen atom of a compound in the compound having a polymer group are bonded directly or via a linker. The linker is preferably a hydrocarbon group and includes alkylene group having carbon atoms of preferably 1 or more and 6 or less, and more preferably 1 or more and 3 or less. Such an alkylene group is preferably, for example, an ethylene group and a propylene group.

The compound having a polymer group is preferably one or more kinds selected from the group consisting of amine having a polyoxyalkylene structure and amine having a polysiloxane structure, more preferably one or more kinds selected from the group consisting of polyoxyalkylene alkyl ether amine, polyoxyalkylene glycol amine and amino-modified silicone, and even more preferably one or more kinds selected from the group consisting of poly(oxyethylene/oxypropylene) alkyl ether amine and poly(oxyethylene/oxypropylene) glycol amine, from the viewpoint of ensuring a chemical stability of the modified cellulose fiber and a dispersion stability as a filler.

Poly(oxyethylene/oxypropylene) alkyl ether amine or poly(oxyethylene/oxypropylene) glycol amine includes a compound represented, for example, by the following formula (i):

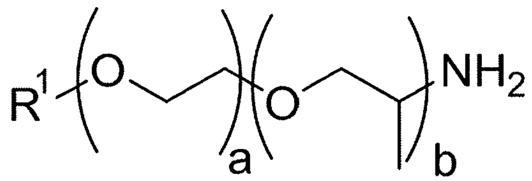

(i)

EO and PO are present randomly or in a block state, and $R^1$, a and b in the formula (i) are same as the $R^1$, a and b in the formula representing one example of the above EO/PO copolymer structure.

The amine having a polyoxyalkylene structure can be prepared according to a known method. For example, ethylene oxide or propylene oxide may be added to propylene glycol alkyl ether in a desired amount, and then hydroxy group end may be aminated. If necessary, the end can be a hydrogen atom by cleaving alkyl ether with an acid. As to these production methods, Japanese Patent Laid-Open No. Hei-3-181448 can be referred to, and the detail of the amine has been described in, for example, Patent Gazette No. 6105139.

As the amine having a polyoxyalkylene structure, a commercially available product can be suitably used.

The specific examples of the amine which may have a hydrocarbon group with the EO polymer structure or the PO polymer structure include SUNBRIGHT MEPA-10H, SUNBRIGHT MEPA-20H, SUNBRIGHT MEPA-50H, SUNBRIGHT MEPA-10T, SUNBRIGHT MEPA-12T, SUNBRIGHT MEPA-20T, SUNBRIGHT MEPA-30T, SUNBRIGHT MEPA-40T and the like, manufactured by NOF Corporation.

The specific examples of the amine which may have a hydrocarbon group with the EO/PO copolymer structure include Jeffamine M-2070, Jeffamine M-2005, Jeffamine M-2095, Jeffamine M-1000, Jeffamine M-600, Surfoamine B200, Surfoamine L100, Surfoamine L200, Surfoamine L207, Surfoamine L300, Surfoamine B-100, XTJ-501, XTJ-506, XTJ-507, XTJ-508, M3000, Jeffamine ED-600, Jeffamine ED-900, Jeffamine ED-2003, Jeffamine D-230, Jeffamine D-400, Jeffamine D-2000, Jeffamine D-4000, XTJ-510, Jeffamine T-3000, Jeffamine T-5000, XTJ-502, XTJ-509, XTJ-510 and the like, manufactured by HUNTSMAN International LLC. These can be used alone or in combination of two or more kinds.

As to the amine having a polysiloxane structure, a commercially available product can be suitably used.

The specific examples of the amine having a polysiloxane structure include TSF4703 and TSF4708 manufactured by Momentive Performance Materials, Inc., SS-3551, SF8457C, SF8417, SF8452C, BY16-209, BY16-892, BY16-898), FZ-3760 and BY16-213 manufactured by Dow corning Toray Co. Ltd., KF-8002, KF-8004, KF-8005, KF-867, KF-864 and KF-859 manufactured by Shin-Etsu Chemical Co., Ltd., and the like. One or more of these compounds can be used in combination.

[Modified Cellulose Fiber]

The modified cellulose fiber in the present invention is formed by binding two or more kinds of amines to an anion-modified cellulose fiber via an amide bond.

The average fiber length, average fiber diameter and cellulose I crystallinity of the modified cellulose fiber in the present invention are preferably same as the average fiber length, average fiber diameter and cellulose I crystallinity of the above anion-modified cellulose fiber.

The introduction rate of modifying groups in the modified cellulose fiber is preferably 40% by mol or more, more preferably 50% by mol or more, and even more preferably 60% by mol or more, from the viewpoint of ensuring a chemical stability of the modified cellulose fiber and a dispersion stability as a filler. On the other hand, the introduction rate is

preferably 100% by mol or less and more preferably 90% by mol or less from the viewpoint of efficiency of production. The introduction rate (% by mol) of the modifying groups refers to a proportion in which a modifying group is introduced (bonded) to an anionic group in the modified cellulose fiber. The introduction rate of the modifying groups in the modified cellulose fiber is measured by the methods described in the Examples mentioned below.

Among the modifying groups introduced, the introduction rate of the modifying groups having smallest molecular weight is preferably 10% by mol or more, more preferably 20% by mol or more and even more preferably 30% by mol or more, from the viewpoint of efficient obtainment. Among the modifying groups introduced, the introduction rate of the modifying groups having smallest molecular weight is preferably 95% by mol or less, more preferably 90% by mol or less and even more preferably 85% by mol or less, from the viewpoint of ensuring the dispersibility of the modified cellulose fiber. The modifying group having smallest molecular weight is introduced by the binding of the amine having smallest molecular weight.

[Modifying Step: Step for Carrying out the Amidation Reaction] The production method of the present invention includes a modifying step for carrying out the amidation reaction between an anion-modified cellulose fiber and two or more kinds of amine having different molecular weight in the presence of a condensing agent, and carrying out the Step 1 before Step 2 in the modifying step is one feature of the present invention.

Step 1: An amine containing an amine having smallest molecular weight is amide bonded to an anion-modified cellulose fiber.

Step 2: After Step 1, an amine containing an amine having largest molecular weight is amide bonded to an anion-modified cellulose fiber.

In the present invention, two or more kinds of amines having different molecular weight are used. Among the plural amines, an amine containing an amine having smallest molecular weight is used in Step 1, and an amine containing an amine having largest molecular weight is used in Step 2 after Step 1.

The amine used in Step 1 has preferably a hydrocarbon group, more preferably a monovalent hydrocarbon group, even more preferably one or more kinds selected from the group consisting of a straight or branched chain, saturated hydrocarbon group and aralkyl group, even more preferably a straight or branched chain, saturated hydrocarbon group, and even more preferably one or more kinds selected from the group consisting of straight or branched chain alkyl groups from the viewpoint of efficient obtainment of the modified cellulose fiber.

For example, an embodiment where an amine having (a) a hydrocarbon group is at first amide bonded and then an amine having (b) a polymer group is amide bonded and the like are listed.

The amine used in Step 2 is preferably an amine having the above polymer group, more preferably one or more kinds selected from the group consisting of an amine having a polyoxyalkylene structure and an amine having a polysiloxane structure, even more preferably one or more kinds selected from the group consisting of polyoxyalkylene alkyl ether amine, polyoxyalkylene glycol amine and amino-modified silicone, and even more preferably one or more kinds selected from the group consisting of poly(oxyethylene/oxypropylene) alkyl ether amine and poly(oxyethylene/oxypropylene) glycol amine, from the viewpoint of efficient obtainment of the modified cellulose fiber.

After the termination of the amidation reaction, a posttreatment may be properly carried out to remove unreacted compounds and the like. As a method of the posttreatment, for example, filtration, centrifugation, dialysis and the like can be used.

The concrete binding manner between a compound having a modifying group and an anionic group is an amide bond, from the viewpoint of ensuring a chemical stability of the modified cellulose fiber and a dispersion stability as a filler. Regarding the amidation reaction, for example, Japanese Patent Laid-Open No. 2015-143337 can be referred to.

For example, in the case where an oxidized cellulose fiber is used as an anion-modified cellulose fiber and a primary amine having a modifying group is used as a compound having a modifying group, a modifying group can be introduced into a carboxy group at C6 position of a glucose constituting a cellulose fiber as shown in the following formula:

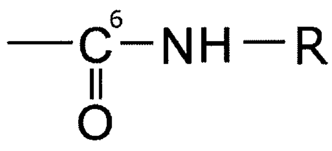

wherein $C^6$ is a carbon atom at a position 6 of a glucose constituting a cellulose fiber, and R is a modifying group.

The amount of the amine is preferably 0.01 mol equivalent or more, more preferably 0.1 mol equivalent or more, and even more preferably 0.5 mol equivalent or more from the viewpoint of efficient obtainment of the modified cellulose fiber. On the other hand, the amount of the amine in Step 1 is preferably 10 mol equivalent or less, more preferably 5 mol equivalent or less, and even more preferably 2 mol equivalent or less from the viewpoint of ensuring the dispersibility of the modified cellulose fiber.

The amine in Step 1 may be only one kind of the amine having smallest molecular weight, and may contain an

amine having larger molecular weight than that of the amine. In the latter case, the proportion of the amine having smallest molecular weight occupying the entity of the amine in Step 1 is preferably 51% by mol or more, and more preferably 75% by mol or more.

The amount of the amine in Step 2 is preferably 0.01 mol equivalent or more, more preferably 0.1 mol equivalent or more, and even more preferably 0.5 mol equivalent or more, from the viewpoint of causing an amide bond and the viewpoint of ensuring the dispersibility of the modified cellulose fiber. On the other hand, the amount of the amine in Step 2 is 10 mol equivalent or less, preferably 5 mol equivalent or less, and more preferably 2 mol equivalent or less from the viewpoint of efficient obtainment of the modified cellulose fiber.

The amine in Step 2 may be only one kind of an amine having largest molecular weight, and may contain an amine having smaller molecular weight than that of the amine. In the latter case, the proportion of an amine having largest molecular weight occupying the entity of the amine in Step 2 is preferably 51% by mol or more, and more preferably 75% by mol or more.

When the amine has a plurality of amino groups or imino groups, the amino groups or imino groups are present such that the total number of moles of the amino groups or imino groups are the number of moles mentioned above. In the specification, the phrase "the compound having a modifying group is 0.01 mol equivalent" means "a compound having a modifying group in an amount in which amino groups or imino groups of the compound having a modifying group correspond to 0.01 mol based on 1 mol of an anionic group of an anion-modified cellulose fiber."

The reaction time in an amidation reaction is preferably 1 hour or more and more preferably 10 hours or more for each of Step 1 and Step 2 from the viewpoint of reactivity, and preferably 24 hours or less and more preferably 20 hours or less from the viewpoint of efficiency of production. In addition, the reaction temperature in an amidation reaction is preferably 0°C or more, more preferably 20°C or more, even more preferably 40°C or more, and even more preferably 50°C or more for each of Step 1 and Step 2 from the viewpoint of reactivity. In addition, the temperature is preferably 200°C or less, more preferably 150°C or less, even more preferably 100°C or less from the viewpoint of inhibiting side reactions.

In order to form an amide bond of an amine, i.e. introduce a modifying group via an amide bond, an anion-modified cellulose fiber and an amine, i.e. a compound having a modifying group may be mixed in the presence of condensing agent, thereby forming an amide bond between an anionic group and an amino group of a compound having a modifying group.

The condensing agent includes, but not particularly limited to, triazine-based compound (for example, 4-(4,6-dimethoxy-1,3,5-triazin-2-yl)-4-methylmorpholinium chloride (DMTMM) and the like), carbodiimide-based compound (for example, 1-ethyl-3-(3-dimethylaminopropyl) carbodiimide hydrochloride (EDC), N,N'-dicyclohexylcarbodiimide (DCC), N,N'-diisopropylcarbodiimide (DIC) and the like), imidazole-based compound (for example, carbonyldiimidazole (CDI), carbonyldi-(1,2,4-triazole) (CDT) and the like), phosphonium-based compound (for example, 1H-benzotriazol-1-yloxytris (dimethylamino) phosphonium hexafluorophosphate (BOP), 1H-benzotriazol-1-yloxytripyrrolizino phosphonium hexafluorophosphate (PyBOP) and the like), uronium-based compound (for example, O-(benzotriazol-1-yl)-N,N,N',N'-tetramethyluronium hexafluorophosphate (HBTU), O-(7-azabenzotriazol-1-yl)-N,N,N',N'-tetramethyluronium hexafluorophosphate (HATU) and the like), and halouronium-based compound (for example, 2-chloro-1, 3-dimethylimidazolinium hexafluorophosphate (CIP), 1-(chloro-1-pyrrolidinylmethylene)pyrrolidinium hexafluorophosphate (PyClU) and the like), and among them, DMTMM is preferred from the viewpoint of reactivity.

A catalyst may be used upon amidation.

The catalyst includes, for example, one or more compounds selected from the group consisting of N-methylmorpholine (NMM), N-hydroxysuccinimide (NHS), 1-hydroxybenzotriazol (HOBt), 1-hydroxy-7-azabenzotriazol (HOAt) and cyano(hydroxyimino)ethyl acetate (Oxyma).

A solvent may or may not be used in an amidation reaction. The specific example of the solvent when the solvent is used includes, for example, methanol, ethanol, isopropanol (IPA), N,N-dimethyl formamide (DMF), dimethylsulfoxide (DMSO), N,N-dimethylacetamide, tetrahydrofuran (THF), acetone, methyl ethyl ketone (MEK), cyclohexanone, ethyl acetate, acetonitrile, dichloromethane, chloroform, toluene, acetic acid, 1-methoxy-2-propanol (PGME), water and the like, and one or more kinds thereof can be used in combination, and the solvent to be used is preferably N,N-dimethyl formamide from the viewpoint of reaction in high efficiency.

The modifying step can be carried out in the condition in which the content of the anion-modified cellulose fiber is higher than conventional ones by using anion-modified cellulose fiber having an average fiber diameter of 1 μm or more and 100 μm or less. The present inventors have found that the viscosity of the reaction liquid containing an anion-modified cellulose fiber and the like is likely to be high and further the liquid tends to be gelated in the modifying step, when the average fiber diameter of the anion-modified cellulose fiber is out of the range mentioned above. In order to prevent the gelation of the reaction liquid, the content of the anion-modified cellulose fiber in the reaction liquid needs to be small, and as a result, the production yield of the modified cellulose fiber is disadvantageously decreased.

Specifically, in the modifying step, the content of the anion-modified cellulose fiber in a reaction liquid at the beginning of the step is preferably 1% by mass or more, more preferably 2% by mass or more, and even more preferably 3% by mass or more from the viewpoint of improving the productivity of the modified cellulose fiber. On the other hand, the

above content is preferably 50% by mass or less, more preferably 10% by mass or less, and even more preferably 7% by mass or less from the viewpoint of being able to produce the modified cellulose fiber in high yield.

The reaction liquid at the beginning of the modifying step contains an anion-modified cellulose fiber, an amine and a condensing agent, and optionally may contain a solvent and/or a catalyst.

The content of the anion-modified cellulose fiber in a reaction liquid at the beginning of the step is obtained from the feeding amount of each component contained in the reaction liquid.

2. Production Method of Fine modified cellulose fiber

A fine modified cellulose fiber can be produced by further finely fibrillating the modified cellulose fiber by the production method of the present invention.

The fine modified cellulose fiber can be produced, for example, by the method including finely fibrillating the modified cellulose fiber according to known methods. For example, the method can be carried out by referring to the explanation of the step of fine fibrillation of Japanese Patent Laid-Open No. 2013-151661.

[Fine modified cellulose fiber]

The average fiber diameter of the fine modified cellulose fiber is in nanometer order regardless of the kinds of modifying groups. The average fiber diameter of the fine modified cellulose fiber is preferably 0.1 nm or more, more preferably 1 nm or more and even more preferably 5 nm or more from the viewpoint of efficiency of production, and preferably 300 nm or less, more preferably 100 nm or less, even more preferably 60 nm or less and even more preferably 40 nm or less from the viewpoint of the adding effect as a filler.

The average fiber length of the fine modified cellulose fiber is preferably 10 nm or more, more preferably 20 nm or more and even more preferably 50 nm or more from the viewpoint of the adding effect as a filler, and preferably 500 nm or less, more preferably 400 nm or less and even more preferably 300 nm or less from the viewpoint of improving the dispersibility.

The average fiber diameter and the average fiber length of the fine modified cellulose fiber are measured by the methods described in the Examples mentioned below.

The preferred crystallinity of the fine modified cellulose fiber and the preferred introduction rate of the modifying group are same as the preferred crystallinity of the modified cellulose fiber and the preferred introduction rate of the modifying group mentioned above.

[Dispersion]

The dispersion in the present invention contains the above fine modified cellulose fiber and a dispersion medium.

The content of the fine modified cellulose fiber in the dispersion is preferably 0.1% by mass or more, more preferably 0.5% by mass or more and even more preferably 1% by mass or more from the viewpoint of exhibiting high mechanical physical properties of a resin composition when formulated into the resin composition as a filler in the case where the dispersion is a resin. The content is preferably 10% by mass or less, more preferably 5% by mass or less and even more preferably 4% by mass or less from the viewpoint of improving the dispersibility of the modified cellulose fiber in the dispersion.

The content of glucose moiety in the fine modified cellulose fiber in the dispersion is preferably 0.1% by mass or more, more preferably 0.3% by mass or more and even more preferably 0.5% by mass or more from the viewpoint of exhibiting high mechanical physical properties of a resin composition when formulated into the resin composition as a filler in the case where the dispersion is a resin. The content is preferably 5% by mass or less, more preferably 3% by mass or less and even more preferably 2% by mass or less from the viewpoint of improving the dispersibility of the modified cellulose fiber in the dispersion.

The "glucose moiety" as used herein refers to a moiety derived from the anion-modified cellulose fiber in the anion-modified cellulose fiber, in the modified cellulose fiber or in the fine modified cellulose fiber, and in the case of the anion-modified cellulose fiber, the moiety refers to the anion-modified cellulose fiber itself, and in the case of the modified cellulose fiber or the fine modified cellulose fiber, the moiety refers to a part remaining after removing an amine by hydrolysis of the modified cellulose fiber and the like.

[Dispersion Medium]

The dispersion medium includes a solvent and/or a resin.

(a) Solvent

As a solvent, ones listed as specific examples of the solvent in the above amidation reaction can be used.

(b) Resin

As the resin in the present invention, non-water-soluble resin which is not dissolved in water or has extremely low solubility in water is preferred from the viewpoint of water resistance. Specifically, a resin having a solubility into water at 25°C of 1 mg or less per 100 g of water is referred to as non-water-soluble resin.
The solubility mentioned above is measured as follows.
A resin in an amount of 100 mg is added to 100 mL (25°C) of water, the mixture is stirred for 24 hours using stirring device such as stirrer, and then the solution (or suspension) is centrifuged for 30 minutes under the condition of 3000 × g at 25°C, to collect the insoluble residues. The residues are dried for 3 days at 105°C to measure the mass after dry (dry mass). Moreover, a resin having dry mass of less than 99 mg is judged as water-soluble, and a resin having dry mass of 99 mg or more is judged as non-water-soluble.
The specific examples of the resin include acrylic resin such as methyl methacrylate polymer, silicone-based resin such as polydimethyl siloxane, epoxy resin, urethane resin, vinyl chloride resin, phenoxy resin, phenol resin, urea resin, melamine resin, polyimide resin, unsaturated polyester resin, diallyl phthalate resin, rubber-based resin and the like. All such resins fall under the above non-water-soluble resin.
The resins may be used alone or may be used as a mixed resin of two or more kinds of resins.
The dispersion may contain an ingredient such as curing agent, curing accelerator, polymerization initiator, plasticizer, stabilizing agent, lubricant, surfactant, inorganic filler, if necessary. The amount of such an ingredient is not particularly limited, and a proper amount may be appropriately adopted.
A method of producing such a dispersion includes a method of production including mixing the above fine modified cellulose fiber and dispersion medium.
The dispersion containing the resin formed can be used as an information household electric appliance part, a packaging material for information household electric appliances, an automobile part, a three-dimensional modeling material, a cushioning material, a repairing material, a sealing material, a heat insulating material, a sound absorbing material and the like.
Regarding the above-mentioned embodiments, the present invention further discloses the following method of producing a modified cellulose fiber, method of producing a fine modified cellulose fiber and a dispersion.

<1> A method of producing a modified cellulose fiber including a modifying step in which two or more kinds of amines having different molecular weight are amide bonded to an anion-modified cellulose fiber, wherein:

an average fiber diameter of the anion-modified cellulose fiber is 1 μm or more and 100 μm or less, and
the method includes carrying out the following Step 1 and subsequently the following Step 2 in the modifying step:

Step 1: an amine containing an amine having smallest molecular weight is amide bonded to an anion-modified cellulose fiber; and
Step 2: after Step 1, an amine containing an amine having largest molecular weight is amide bonded to an anion-modified cellulose fiber.

<2> The method of producing the modified cellulose fiber according to the above <1>, wherein an average fiber diameter of the anion-modified cellulose fiber is preferably 1 μm or more, more preferably 5 μm or more, even more preferably 10 μm or more and even more preferably 20 μm or more, and preferably 100 μm or less, more preferably 60 μm or less and even more preferably 40 μm or less, and an average fiber length of the anion-modified cellulose fiber is preferably 1 μm or more, more preferably 10 μm or more, even more preferably 50 μm or more and even more preferably 100 μm or more, and preferably 1,000 μm or less, more preferably 500 μm or less and even more preferably 400 μm or less.
<3> The method of producing the modified cellulose fiber according to the above <1> or <2>, wherein the content of an anionic group in the anion-modified cellulose fiber is preferably 0.1 mmol/g or more, more preferably 0.6 mmol/g or more, even more preferably 0.8 mmol/g or more and even more preferably 1.0 mmol/g or more, and the upper limit is preferably 3.0 mmol/g or less, more preferably 2.5 mmol/g or less and even more preferably 2.0 mmol/g or less.
<4> The method of producing the modified cellulose fiber according to any one of the above <1> to <3>, wherein the anion-modified cellulose fiber is preferably an oxidized cellulose fiber resulting from the oxidation of a hydroxy group in a cellulose constituting unit, more preferably a cellulose fiber having a carboxy group, and even more preferably a cellulose fiber of which C6 position of the cellulose constituting unit is a carboxy group.

<5> The method of producing the modified cellulose fiber according to any one of the above <1> to <4>, wherein a modifying group to be introduced into the anion-modified cellulose fiber in the modifying step is preferably a combination of two or more kinds of hydrocarbon groups, a combination of a hydrocarbon group and a polymer group or a combination of two or more kinds of polymer groups, and more preferably a combination of a hydrocarbon group and a polymer group.

<6> The method of producing the modified cellulose fiber according to any one of the above <1> to <5>, wherein a molecular weight ratio of an amine having largest molecular weight to an amine having smallest molecular weight (molecular weight of an amine having largest molecular weight / molecular weight of an amine having smallest molecular weight) is preferably more than 1, more preferably 1.5 or more, and even more preferably 2 or more, and preferably 100 or less, more preferably 50 or less and even more preferably 20 or less.

<7> The method of producing the modified cellulose fiber according to any one of the above <1> to <6>, wherein the molecular weight of the amine having smallest molecular weight is preferably 20 or more, more preferably 50 or more and even more preferably 80 or more, and preferably 2,000 or less, more preferably 1,000 or less and even more preferably 300 or less, and the molecular weight of the amine having largest molecular weight is preferably 100 or more, more preferably 200 or more and even more preferably 1,000 or more, and preferably 4,000 or less, more preferably 3,000 or less and even more preferably 2,000 or less.

<8> The method of producing the modified cellulose fiber according to any one of the above <1> to <7>, wherein the hydrocarbon group is preferably a monovalent hydrocarbon group, more preferably one or more kinds selected from the group consisting of a straight or branched chain, saturated hydrocarbon group, a straight or branched chain, unsaturated hydrocarbon group, a cyclic saturated hydrocarbon group, an aryl group and an aralkyl group, even more preferably one or more kinds selected from the group consisting of a straight or branched chain, saturated hydrocarbon group and an aralkyl group, even more preferably one or more kinds selected from the group consisting of a straight or branched chain alkyl group, and even more preferably a straight chain saturated hydrocarbon group, and the polymer group is preferably a functional group having a repeat structure linked by a structure having oxygen atom, more preferably a functional group having a repeat structure linked by oxygen atom such as a polyoxyalkylene structure and a polysiloxane structure, even more preferably a group having a polyoxyalkylene structure, and even more preferably an alkoxy polyoxyalkylene group.

<9> The method of producing the modified cellulose fiber according to any one of the above <1> to <8>, wherein the number of carbon atoms of the hydrocarbon group is preferably 1 or more, more preferably 3 or more and even more preferably 6 or more, and preferably 30 or less, more preferably 22 or less, even more preferably 18 or less and even more preferably 10 or less.

<10> The method of producing the modified cellulose fiber according to any one of the above <1> to <9>, wherein the aralkyl group is preferably an alkyl group having a hydrogen atom substituted with a phenyl group, and more preferably a benzyl group and a phenethyl group.

<11> The method of producing the modified cellulose fiber according to any one of the above <1> to <10>, wherein the hydrocarbon group preferably further has a substituent or has a part of the hydrocarbon group substituted to a hydronitrogen group.

<12> The method of producing the modified cellulose fiber according to any one of the above <1> to <11>, wherein the formula amount (molecular weight) of the polymer group is preferably 100 or more, more preferably 200 or more, even more preferably 300 or more, even more preferably 500 or more, even more preferably 1,000 or more and even more preferably 1,500 or more, and preferably 1,000,000 or less, more preferably 100,000 or less, even more preferably 10,000 or less, even more preferably 7,000 or less, even more preferably 5,000 or less, even more preferably 4,000 or less, even more preferably 3,500 or less and even more preferably 2,500 or less.

<13> The method of producing the modified cellulose fiber according to any one of the above <1> to <12>, wherein the polyoxyalkylene structure is preferably a (co)polymer structure of one or more oxyalkylene selected from oxyalkylene having carbon atoms of 2 or more and 8 or less, more preferably a (co)polymer structure of one or more oxyalkylene selected from oxyalkylene having carbon atoms of 2 or more and 4 or less, even more preferably a (co)polymer structure of one or more oxyalkylene selected from ethylene oxide (EO) and propylene oxide (PO), and even more preferably a copolymer structure having ethylene oxide and propylene oxide polymerized randomly or in a block state (EO/PO copolymer structure).

<14> The method of producing the modified cellulose fiber according to any one of the above <1> to <13>, wherein the copolymer structure having ethylene oxide and propylene oxide polymerized randomly or in a block state is preferably a structure represented by the following formula:

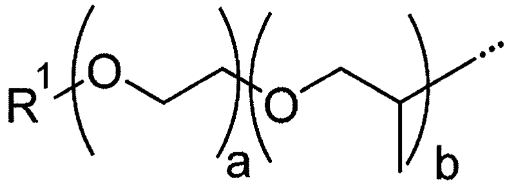

wherein $R^1$ represents a hydrogen atom, a hydrocarbon group having carbon atoms of 1 or more and 6 or less, or $-CH_2CH(CH_3)NH_2$ group, EO and PO are present randomly or in a block state, a is a positive number showing an average number of moles of EO added, and b is a positive number showing an average number of moles of PO added, wherein the a is preferably 1 or more, more preferably 3 or more, even more preferably 6 or more, even more preferably 11 or more, even more preferably 15 or more, even more preferably 20 or more, even more preferably 25 or more and even more preferably 30 or more, and preferably 100 or less, more preferably 70 or less, even more preferably 60 or less, even more preferably 50 or less and even more preferably 40 or less, the b is preferably 1 or more, more preferably 3 or more and even more preferably 5 or more, and preferably 50 or less, more preferably 40 or less, even more preferably 30 or less, even more preferably 25 or less, even more preferably 20 or less, even more preferably 15 or less and even more preferably 10 or less, and the a + b is preferably 4 or more, more preferably 6 or more and even more preferably 8 or more, and preferably 100 or less and more preferably 70 or less.

<15> The method of producing the modified cellulose fiber according to any one of the above <1> to <14>, wherein the content of PO in the EO/PO copolymer structure (% by mol) is preferably 1% by mol or more, more preferably 5% by mol or more, even more preferably 7% by mol or more, even more preferably 10% by mol or more and even more preferably 20% by mol or more, and preferably 100% by mol or less, more preferably 90% by mol or less, even more preferably 85% by mol or less, even more preferably 75% by mol or less, even more preferably 60% by mol or less, even more preferably 50% by mol or less, even more preferably 40% by mol or less and even more preferably 30% by mol or less.

<16> The method of producing the modified cellulose fiber according to any one of the above <1> to <15>, wherein the amine is preferably a compound having a hydrocarbon group and/or a compound having a polymer group, the preferred compound having a hydrocarbon group is ethylamine, diethylamine, triethylamine, propylamine, dipropylamine, butylamine, dibutylamine, hexylamine, 2-ethylhexylamine, dihexylamine, trihexylamine, octylamine, dioctylamine, trioctylamine, dodecylamine, didodecylamine, stearylamine, distearylamine, monoethanolamine, diethanolamine, triethanolamine, oleylamine, aniline, octadecylamine, dimethylbehenylamine, benzylamine, dibenzylamine, tritylamine and naphthylamine, the preferred compound having a polymer group is one or more kinds selected from the group consisting of an amine having a polyoxyalkylene structure and an amine having a polysiloxane structure, more preferred compound having a polymer group is one or more kinds selected from the group consisting of polyoxyalkylene alkyl ether amine, polyoxyalkylene glycol amine and amino-modified silicone, and even more preferred compound having a polymer group is one or more kinds selected from the group consisting of poly(oxyethylene/oxypropylene) alkyl ether amine and poly(oxyethylene/oxypropylene) glycol amine.

<17> The method of producing the modified cellulose fiber according to any one of the above <1> to <16>, wherein the polymer group in the compound having a polymer group and the nitrogen atom of the compound are preferably directly bonded or bonded via a liker, the linker is preferably a hydrocarbon group and preferably an alkylene group having carbon atoms of 1 or more and 6 or less and more preferably 1 or more and 3 or less, and the alkylene group is preferably an ethylene group and a propylene group.

<18> The method of producing the modified cellulose fiber according to any one of the above <1> to <17>, wherein the amine which may have a hydrocarbon group with the EO/PO copolymer structure is preferably one or more kinds selected from the group consisting of Jeffamine M-2070, Jeffamine M-2005, Jeffamine M-2095, Jeffamine M-1000, Jeffamine M-600, Surfoamine B200, Surfoamine L100, Surfoamine L200, Surfoamine L207, Surfoamine L300, Surfoamine B-100, XTJ-501, XTJ-506, XTJ-507, XTJ-508, M3000, Jeffamine ED-600, Jeffamine ED-900, Jeffamine ED-2003, Jeffamine D-230, Jeffamine D-400, Jeffamine D-2000, Jeffamine D-4000, XTJ-510, Jeffamine T-3000, Jeffamine T-5000, XTJ-502, XTJ-509 and XTJ-510 manufactured by HUNTSMAN International LLC.

<19> The method of producing the modified cellulose fiber according to any one of the above <1> to <18>, wherein the average fiber length, average fiber diameter and cellulose I crystallinity of the modified cellulose fiber are preferably same as the average fiber length, average fiber diameter and cellulose I crystallinity of the above mentioned anion-modified cellulose fiber.

<20> The method of producing the modified cellulose fiber according to any one of the above <1> to <19>, wherein the introduction rate of the modifying group in the modified cellulose fiber is preferably 40% by mol or more, more preferably 50% by mol or more and even more preferably 60% by mol or more, and preferably 100% by mol or less and more preferably 90% by mol or less, and the introduction rate of the modifying group having smallest molecular weight among the modifying groups introduced is preferably 10% by mol or more, more preferably 20% by mol or more and

even more preferably 30% by mol or more, and preferably 95% by mol or less, more preferably 90% by mol or less and even more preferably 85% by mol or less.

<21> The method of producing the modified cellulose fiber according to any one of the above <1> to <20>, wherein the amine used in Step 1 is preferably an amine having a hydrocarbon group, more preferably an amine having a monovalent hydrocarbon group, even more preferably an amine having one or more kinds selected from the group consisting of a straight or branched chain, saturated hydrocarbon group and an aralkyl group, even more preferably an amine having a straight or branched chain, saturated hydrocarbon group and even more preferably an amine having one or more kinds selected from the group consisting of straight or branched chain alkyl groups, and the amine used in Step 2 is preferably an amine having a polymer group, more preferably one or more kinds selected from the group consisting of an amine having a polyoxyalkylene structure and an amine having a polysiloxane structure, even more preferably one or more kinds selected from the group consisting of polyoxyalkylene alkyl ether amine, polyoxyalkylene glycol amine and amino-modified silicone and even more preferably one or more kinds selected from the group consisting of poly(oxyethylene/oxypropylene) alkyl ether amine and poly(oxyethylene/oxypropylene) glycol amine.

<22> The method of producing the modified cellulose fiber according to any one of the above <1> to <21>, wherein the amount of amine in Step 1 is preferably 0.01 mol equivalent or more, more preferably 0.1 mol equivalent or more and even more preferably 0.5 mol equivalent or more, and preferably 10 mol equivalent or less, more preferably 5 mol equivalent or less and even more preferably 2 mol equivalent or less, and the amount of the amine in Step 2 is preferably 0.01 mol equivalent or more, more preferably 0.1 mol equivalent or more and even more preferably 0.5 mol equivalent or more, and preferably 10 mol equivalent or less, more preferably 5 mol equivalent or less and even more preferably 2 mol equivalent or less.

<23> The method of producing the modified cellulose fiber according to any one of the above <1> to <22>, wherein the reaction time in an amidation reaction is preferably 1 hour or more and more preferably 10 hours or more, and preferably 24 hours or less and more preferably 20 hours or less for each of Step 1 and Step 2, and the reaction temperature in an amidation reaction is preferably 0°C or more, more preferably 20°C or more, even more preferably 40°C or more, and even more preferably 50°C or more, and preferably 200°C or less, more preferably 150°C or less and even more preferably 100°C or less for each of Step 1 and Step 2.

<24> The method of producing the modified cellulose fiber according to any one of the above <1> to <23>, wherein the anion-modified cellulose fiber and the amine, i.e. a compound having a modifying group are mixed in the presence of a condensing agent.

<25> The method of producing the modified cellulose fiber according to any one of the above <1> to <24>, wherein the condensing agent is preferably a triazine-based compound (for example, 4-(4,6-dimethoxy-1,3,5-triazine-2-yl)-4-methylmorpholinium chloride (DMTMM) and the like), a carbodiimide-based compound (for example, 1-ethyl-3-(3-dimethylaminopropyl) carbodiimide hydrochloride (EDC), N,N'-dicyclohexylcarbodiimide (DCC), N,N'-diisopropylcarbodiimide (DIC) and the like), an imidazole-based compound (for example, carbonyldiimidazole (CDI), carbonyldi-(1,2,4-triazole) (CDT) and the like), a phosphonium-based compound (for example, 1H-benzotriazol-1-yloxytris(dimethylamino)phosphonium hexafluorophosphate (BOP), 1H-benzotriazol-1-yloxytripyrrolizino phosphonium hexafluorophosphate (PyBOP) and the like), a uronium-based compound (for example, O-(benzotriazol-1-yl)-N,N,N',N'-tetramethyluronium hexafluorophosphate (HBTU), O-(7-azabenzotriazol-1-yl)-N,N,N',N'-tetramethyluronium hexafluorophosphate (HATU) and the like), and a halouronium-based compound (for example, 2-chloro-1,3-dimethylimidazolinium hexafluorophosphate (CIP), 1-(chloro-1-pyrrolidinylmethylene)pyrrolidinium hexafluorophosphate (PyCIU) and the like), and more preferably DMTMM.

<26> The method of producing the modified cellulose fiber according to any one of the above <1> to <25>, wherein a catalyst is preferably used upon the amidation, and the preferred catalyst is one or more compounds selected from the group consisting of N-methylmorpholine (NMM), N-hydroxysuccinimide (NHS), 1-hydroxybenzotriazol (HOBt), 1-hydroxy-7-azabenzotriazol (HOAt) and cyano(hydroxyimino)ethyl acetate (Oxyma).

<27> The method of producing the modified cellulose fiber according to any one of the above <1> to <26>, wherein the content of the anion-modified cellulose fiber in a reaction liquid at the beginning of the step in the modifying step is preferably 1% by mass or more, more preferably 2% by mass or more and even more preferably 3% by mass or more, and preferably 50% by mass or less, more preferably 10% by mass or less and even more preferably 7% by mass or less.

<28> The method of producing the modified cellulose fiber according to any one of the above <1> to <27>, wherein the method includes subjecting the anion-modified cellulose fiber to a heat degradation treatment, a biochemical treatment and/or a chemical treatment prior to the modifying step.

<29> The method of producing the modified cellulose fiber according to any one of the above <1> to <28>, wherein the molecular weight ratio of an amine having largest molecular weight to an amine having smallest molecular weight (molecular weight of an amine having largest molecular weight / molecular weight of an amine having smallest molecular weight) is preferably more than 1, more preferably 1.5 or more and even more preferably 2 or more, and preferably 100 or less, more preferably 50 or less, and even more preferably 20 or less, and the molecular weight of the

amine having smallest molecular weight is preferably 20 or more, more preferably 50 or more and even more preferably 80 or more, and preferably 2,000 or less, more preferably 1,000 or less and even more preferably 300 or less, and the molecular weight of the amine having largest molecular weight is preferably 100 or more, more preferably 200 or more and even more preferably 1,000 or more, and preferably 4,000 or less, more preferably 3,000 or less and even more preferably 2,000 or less.

<30> The method of producing the modified cellulose fiber according to any one of the above <1> to <29>, wherein the average fiber diameter of the anion-modified cellulose fiber is preferably 1 μm or more and 100 μm or less, more preferably 5 μm or more and 60 μm or less, even more preferably 10 μm or more and 40 μm or less and even more preferably 20 μm or more and 40 μm or less, and the average fiber length of the anion-modified cellulose fiber is preferably 1 μm or more and 1,000 μm or less, more preferably 10 μm or more and 500 μm or less, even more preferably 50 μm or more and 400 μm or less and even more preferably 100 μm or more and 400 μm or less.

<31> The method of producing the modified cellulose fiber according to any one of the above <1> to <30>, wherein the content of the anionic group in the anion-modified cellulose fiber is preferably 0.1 mmol/g or more and 3.0 mmol/g or less, more preferably 0.6 mmol/g or more and 2.5 mmol/g or less, even more preferably 0.8 mmol/g or more and 2.0 mmol/g or less and even more preferably 1.0 mmol/g or more and 2.0 mmol/g or less.

<32> The method of producing the modified cellulose fiber according to any one of the above <1> to <31>, wherein the molecular weight ratio of an amine having largest molecular weight to an amine having smallest molecular weight (molecular weight of an amine having largest molecular weight / molecular weight of an amine having smallest molecular weight) is preferably more than 1 and 100 or less, more preferably 1.5 or more and 50 or less and even more preferably 2 or more and 20 or less.

<33> The method of producing the modified cellulose fiber according to any one of the above <1> to <32>, wherein the molecular weight of the amine having smallest molecular weight is preferably 20 or more and 2,000 or less, more preferably 50 or more and 1,000 or less, even more preferably 80 or more and 300 or less, and the molecular weight of the amine having largest molecular weight is preferably 100 or more and 4,000 or less, more preferably 200 or more and 3,000 or less and even more preferably 1,000 or more and 2,000 or less.

<34> The method of producing the modified cellulose fiber according to any one of the above <1> to <33>, wherein the number of carbon atoms of the hydrocarbon group is preferably 1 or more and 30 or less, more preferably 3 or more and 22 or less, even more preferably 6 or more and 18 or less, and even more preferably 6 or more and 10 or less.

<35> The method of producing the modified cellulose fiber according to any one of the above <1> to <34>, wherein the formula amount (molecular weight) of the polymer group is preferably 100 or more and 1,000,000 or less, more preferably 200 or more and 100,000 or less, even more preferably 300 or more and 10,000 or less, even more preferably 500 or more and 7,000 or less, even more preferably 1,000 or more and 5,000 or less, even more preferably 1,500 or more and 4,000 or less, even more preferably 1,500 or more and 3,500 or less, and even more preferably 1,500 or more and 2,500 or less.

<36> The method of producing the modified cellulose fiber according to any one of the above <1> to <35>, wherein a in the copolymer structure is preferably 1 or more and 100 or less, more preferably 3 or more and 70 or less, even more preferably 6 or more and 60 or less, even more preferably 11 or more and 50 or less, even more preferably 15 or more and 40 or less, even more preferably 20 or more and 40 or less, even more preferably 25 or more and 40 or less and even more preferably 30 or more and 40 or less, and b is preferably 1 or more and 50 or less, more preferably 3 or more and 40 or less, even more preferably 5 or more and 30 or less, even more preferably 5 or more and 25 or less, even more preferably 5 or more and 20 or less, even more preferably 5 or more and 15 or less and even more preferably 5 or more and 10 or less, and a + b is preferably 4 or more and 100 or less, more preferably 6 or more and 70 or less and even more preferably 8 or more and 70 or less.

<37> The method of producing the modified cellulose fiber according to any one of the above <1> to <36>, wherein the content of PO in EO/PO copolymer structure (% by mol) is preferably 1% by mol or more and 100% by mol or less, more preferably 5% by mol or more and 90% by mol or less, even more preferably 7% by mol or more and 85% by mol or less, even more preferably 10% by mol or more and 75% by mol or less, even more preferably 20% by mol or more and 60% by mol or less, even more preferably 20% by mol or more and 50% by mol or less, even more preferably 20% by mol or more and 40% by mol or less, and even more preferably 20% by mol or more and 30% by mol or less.

<38> The method of producing the modified cellulose fiber according to any one of the above <1> to <37>, wherein the introduction rate of the modifying group in the modified cellulose fiber is preferably 40% by mol or more and 100% by mol or less, more preferably 50% by mol or more and 90% by mol or less and even more preferably 60% by mol or more and 90% by mol or less, and the introduction rate of the modifying group having smallest molecular weight among the introduced modifying groups is preferably 10% by mol or more and 95% by mol or less, more preferably 20% by mol or more and 90% by mol or less and even more preferably 30% by mol or more and 85% by mol or less.

<39> The method of producing the modified cellulose fiber according to any one of the above <1> to <38>, wherein the amount of the amine in Step 1 is preferably 0.01 mol equivalent or more and 10 mol equivalent or less, more preferably 0.1 mol equivalent or more and 5 mol equivalent or less and even more preferably 0.5 mol equivalent or more and 2 mol

equivalent or less, and the amount of the amine in Step 2 is preferably 0.01 mol equivalent or more and 10 mol equivalent or less, more preferably 0.1 mol equivalent or more and 5 mol equivalent or less and even more preferably 0.5 mol equivalent or more and 2 mol equivalent or less.

<40> The method of producing the modified cellulose fiber according to any one of the above <1> to <39>, wherein the reaction time in the amidation reaction is preferably 1 hour or more and 24 hours or less and more preferably 10 hours or more and 20 hours or less for each of Step 1 and Step 2, and the reaction temperature in the amidation reaction is preferably 0°C or more and 200°C or less, more preferably 20°C or more and 150°C or less, even more preferably 40°C or more and 100°C or less and even more preferably 50°C or more and 100°C or less for each of Step 1 and Step 2.

<41> The method of producing the modified cellulose fiber according to any one of the above <1> to <40>, wherein the content of the anion-modified cellulose fiber in a reaction liquid at the beginning of the step in the modifying step is preferably 1% by mass or more and 50% by mass or less, more preferably 2% by mass or more and 10% by mass or less, and even more preferably 3% by mass or more and 7% by mass or less.

<42> The method of producing the modified cellulose fiber according to any one of the above <1> to <41>, wherein the molecular weight ratio of the amine having largest molecular weight to the amine having smallest molecular weight (molecular weight of an amine having largest molecular weight / molecular weight of an amine having smallest molecular weight) is preferably more than 1 and 100 or less, more preferably 1.5 or more and 50 or less and even more preferably 2 or more and 20 or less, the molecular weight of the amine having smallest molecular weight is preferably 20 or more and 2,000 or less, more preferably 50 or more and 1,000 or less and even more preferably 80 or more and 300 or less, and the molecular weight of the amine having largest molecular weight is preferably 100 or more and 4,000 or less, more preferably 200 or more and 3,000 or less and even more preferably 1,000 or more and 2,000 or less.

<43> A method of producing a fine modified cellulose fiber includes finely fibrillating the modified cellulose fiber obtained by the method of producing the modified cellulose fiber as defined in any one of the above <1> to <42>, wherein the average fiber diameter of the fine modified cellulose fiber is preferably 0.1 nm or more and 300 nm or less, more preferably 1 nm or more and 100 nm or less, even more preferably 5 nm or more and 60 nm or less and even more preferably 5 nm or more and 40 nm or less, the average fiber length of the fine modified cellulose fiber is preferably 10 nm or more and 500 nm or less, more preferably 20 nm or more and 400 nm or less and even more preferably 50 nm or more and 300 nm or less, the preferred crystallinity of the fine modified cellulose fiber and the preferred introduction rate of the modifying group are same as the preferred crystallinity of the modified cellulose fiber and the preferred introduction rate of the modifying group mentioned above.

<44> A dispersion containing the fine modified cellulose fiber obtained by the method of producing the fine modified cellulose fiber as defined in the above <43> and a dispersion medium, wherein the dispersion medium is a solvent and/or a resin, the solvent is preferably one or more kinds selected from the group consisting of methanol, ethanol, isopropanol (IPA), N,N-dimethyl formamide (DMF), dimethylsulfoxide (DMSO), N,N-dimethylacetamide, tetrahydrofuran (THF), acetone, methyl ethyl ketone (MEK), cyclohexanone, ethyl acetate, acetonitrile, dichloromethane, chloroform, toluene, acetic acid, 1-methoxy-2-propanol (PGME) and water and more preferably N,N-dimethyl formamide, and the resin is preferably an acrylic resin such as methyl methacrylate polymer, a silicone-based resin such as polydimethyl siloxane, an epoxy resin, an urethane resin, a vinyl chloride resin, a phenoxy resin, a phenol resin, an urea resin, a melamine resin, a polyimide resin, an unsaturated polyester resin, a diallyl phthalate resin and a rubber-based resin.

## EXAMPLES

Hereinafter, the present invention will be particularly described by showing Examples and Comparative Examples, without intending to limit the present invention to the following Examples. Here, "ambient pressure" represents 101.3 kPa, and "ambient temperature" represents 25°C.

[Average Fiber Diameter, Average Fiber Length and Average Aspect Ratio of Various Cellulose Fibers]

Depending on the sizes of cellulose fibers to be measured, either of the following two measurement methods was selected and the measurement was carried out.

(1) Deionized water or N,N-dimethyl formamide (DMF) was added to the cellulose fiber to be measured, to prepare a dispersing liquid, a content of which was 0.0001% by mass. The dispersing liquid was added dropwise to mica (mica), and dried to provide an observation sample. A fiber height (a difference of height between portions with fiber and without fiber) of the cellulose fibers in the observation sample was measured with an atomic force microscope (AFM), Nanoscope II Tapping mode AFM, manufactured by Digital Instrument; a probe used being Point Probe (NCH) manufactured by NANOSENSORS. During the measurement, 100 strands of cellulose fibers are extracted from a

microscopic image in which the cellulose fibers can be confirmed, and an average fiber diameter was calculated from the fiber heights of the fibers. An average fiber length was calculated from a distance in the direction of fibers. An average aspect ratio was calculated by an average fiber length/an average fiber diameter. The height analyzed in the image according to the AFM was considered as a fiber diameter.

(2) Deionized water was added to cellulose fibers to be measured, to prepare a dispersing liquid, a content of which is 0.01% by mass. The dispersing liquid was measured with a wet-dispersion type image analysis particle distribution counter manufactured by JASCO International Co., Ltd., IF-3200, under the conditions of a front lens: 2 folds, telecentric zoom lens: 1 fold, image resolution: 0.835 μm/pixel, syringe inner diameter: 6,515 μm, spacer thickness: 500 μm, image recognition mode: ghost, threshold: 8, amount of analytical sample: 1 mL, and sampling: 15%. Moreover, when the cellulose fiber was approximated to a rectangular, the length of the short axis was considered as a fiber diameter and the length of the long axis was considered as a fiber length, and measurement was carried out for 100 cellulose fibers to calculate the average.

[Content of Anionic Group of Various Cellulose Fibers]

Cellulose fibers to be measured with the mass of 0.5 g on a dry basis were placed in a beaker, and deionized water or a mixed solvent of methanol/deionized water = 2/1 (volume ratio) was added thereto to make up a total volume of 55 mL. Five milliliters of a 0.01 M aqueous sodium chloride solution was added thereto to provide a dispersing liquid. The dispersing liquid was stirred until the cellulose fibers to be measured were sufficiently dispersed. A 0.1 M hydrochloric acid was added to this dispersing liquid to adjust its pH to 2.5 to 3, and a 0.05 M aqueous sodium hydroxide solution was added dropwise to the dispersing liquid with an automated titration instrument manufactured by DKK-TOA CORPORATION, AUT-701, under the conditions of a waiting time of 60 seconds. The values of electroconductivity and a pH were measured every minute. The measurements were continued up to a pH of 11 or so to obtain an electroconductivity curve. A titrated amount of sodium hydroxide was obtained from this electroconductivity curve, and the content of the anionic group of the cellulose fibers to be measured was calculated in accordance with the following formula:

Content of Anionic Group (mmol/g) = [Titrated Amount of Aqueous Sodium Hydroxide Solution (mL) × Aqueous Sodium Hydroxide Solution Concentration (0.05 M)] / [Mass of Cellulose Fibers to Be Measured (0.5 g)]

[Confirmation of Crystal Structure in Various Cellulose Fibers]

The crystal structures of various cellulose fibers such as the cellulose fiber, the anion-modified cellulose fiber and the modified cellulose fiber were confirmed by measuring with a diffractometer manufactured by Rigaku Corporation, MiniFlexII, under the following conditions.

Condition for preparation of measurement pellet: a smooth pellet having an area of 320 $mm^2$ × a thickness of 1 mm was prepared by applying pressure to the subject cellulose fiber in a range of from 10 to 20 MPa with a tablet forming machine.

X-ray diffraction analysis condition: step angle of 0.01°, scanning speed of 10°/min, measurement range: diffraction angle of 2θ = 5° to 40°

X-ray source: Cu/Kα-radiation, tube voltage: 15 kV, tube current: 30 mA Peak Splitting Conditions: After the background noise was removed, a peak was fit with a Gaussian function so that a difference in errors between 2θ = 13-23° falls within 5%.

The crystallinity of cellulose I crystal structure was calculated using areas of X-ray diffraction peaks obtained by the above peak splitting based on the following formula (A).

$$\text{Cellulose I Crystallinity, \%} = [I_{cr} / (I_{cr} + I_{am})] \times 100 \qquad (A)$$

wherein $I_{cr}$ is a diffraction peak area of a lattice face (002 face) (angle of diffraction 2θ = 22-23°), and $I_{am}$ is a diffraction peak area of an amorphous portion (angle of diffraction 2θ = 18.5°), in X-ray diffraction.

[Introduction Rate of Modifying Group in Modified Cellulose Fiber and Fine modified cellulose fiber]

The modified cellulose fiber or the fine modified cellulose fiber was dried for 16 hours using freeze-drier manufactured by TOKYO RIKAKIKAI CO., LTD.; FDU-2110, and thereafter a pellet having a diameter of 7 mm was produced with pressure of two tons using a tableting machine manufactured by ST Japan INC.; Pixie tabletop mini oil press machine. The FTIR spectrum of the resulting pellet was measured by Fourier transform infrared spectrometer manufactured by Thermo; NICOLET iS5. Spectra derived from carboxylic acid occurred near 1730 $cm^{-1}$, C=O stretching

vibration of amide occurred near 1660 $cm^{-1}$ and O-H vending vibration of water occurred near 1620 $cm^{-1}$ were subjected to component separation by fitting analysis using analysis software manufactured by HULINKS Inc.; igor pro 8 according to the following formula 1. Moreover, the introduction rate of a modifying group in the modified cellulose fiber or the fine modified cellulose fiber (% by mol) was calculated according to the following formula by making each peak area ratio of carboxylic acid and amide obtained as 100% by mol.

$$Abs(\nu) = Abs_0 + a\nu + \sum_{i=1}^{3} \frac{A_i e^{\frac{-4ln(2)(\nu-\nu_{ci})^2}{\omega_i^2}}}{\omega_i \sqrt{\frac{\pi}{4ln(2)}}}$$

(Formula 1)

Wherein each of ν and $\nu_c$ is frequency and center frequency of a peak, and ω is width of a peak. In addition, $Abs_0$ and a are an intercept and an inclination of baseline correction, respectively.

[Solid Ingredient Content of Dispersing liquid, Dispersion, Suspension or Mixture]

The sample was heated under a condition of ambient pressure and 150°C, and the mass of the sample was measured every 30 seconds. Heating was terminated at the time when mass-decreasing rate of the sample reached 0.1% or less, and the remaining part at that time was considered as an amount of the solid ingredient. The percentage of the value obtained by dividing the amount of the solid ingredient by the mass of the sample before heating was considered as a solid ingredient content.

[Content of Glucose Moiety in Mixture, Dispersion or Dispersing liquid]

According to the following formula, the content of the glucose moiety in the mixture, dispersion or dispersing liquid was calculated. Incidentally, as matter of convenience of the explanation, Step 1 is referred to as "first amidation reaction" and Step 2 is referred to as "second amidation reaction." In addition, the amine used in the first amidation reaction is referred to as "first amine" and the amine used in the second amidation reaction is referred to as "second amine."

Content of Glucose Moiety in Dispersing liquid or Mixture after Termination of First Amidation Reaction (% by mass) = 1000 × 100 × Solid Ingredient Content in Dispersing liquid (% by mass) / [1000 × 100 + Molecular Weight of First Amine (g/mol) × Anionic Group Content of Shortened Anion-modified cellulose fiber

(mmol/g) × Modifying Group Introduction Rate at Termination of First (Formula 2)

Content of Glucose Moiety in Dispersion or Dispersing liquid after Termination of Second Amidation Reaction (% by mass) = 1000 × 100 × Solid Ingredient Content in Dispersion or Dispersing liquid (% by mass) / [1000 × 100 + Molecular Weight of First Amine (g/mol) × Anionic Group Content of Shortened Anion-modified cellulose fiber (mmol/g) × Modifying Group Introduction Rate at Termination of First Amidation Reaction (mol%) + Molecular Weight of Second Amine (g/mol) × Anionic Group Content of Shortened Anion-modified cellulose fiber (mmol/g) × Increased Amount of Modifying Group Introduction Rate during Second Amidation Reaction (mol%)] (Formula 3)

[Transmittance of Dispersion]

The transmittance of dispersion in each Example and Comparative Example was measured as follows, and transparencies thereof were evaluated. The measurement of the transmittance was carried out under ambient temperature and ambient pressure.

Concretely, 3 mL of the dispersion to be measured was placed in quartz cell having 10 mm of light pass length, and the absorbance at 660 nm of wavelength was immediately measured using a double beam spectrometer, manufactured by Hitachi High-Tech Science Corporation, U-2910. The solvent used in the preparation of each dispersion was used as a blank (i.e. 100% transmittance), and the transmittance (%) was obtained from each dispersion.

[Anion-modified cellulose fiber]

The anion-modified cellulose fiber having physical property values given in Table 1 was used as a raw material.

[Table 1]

Table 1

| | |
|---|---|
| Average fiber diameter | 40 μm |
| Average fiber length | 2022 μm |
| Carboxy group content | 1.56 mmol/g |

Such an anion-modified cellulose fiber can be prepared, for example, as the following oxidation treatment with TEMPO.

[Oxidation Treatment with TEMPO]

In a 2-L beaker made of PP equipped with a mechanical stirrer and agitation blades, 10 g of bleached kraft pulp fiber from needle-leaf trees as a native cellulose fiber of a raw material and 990 g of deionized water were weighed out, and the contents are stirred at 25°C and 100 rpm for 30 minutes. Then, 0.13 g of TEMPO, 1.3 g of sodium bromide, and 35.5 g of an aqueous 10.5% by mass sodium hypochlorite solution are added in this order to 10 g of the pulp fibers. A pH stud titration is then carried out using an automated titration instrument, and an aqueous 0.5 M sodium hydroxide solution is added dropwise thereto to keep a pH at 10.5. The reaction is carried out at 25°C, at a stirring rate of 100 rpm for 120 minutes. Next, 0.01 M of hydrogen chloride is added thereto with stirring to adjust pH of the suspension to 2. Then, the solid ingredient is filtered off by suction filtration. The solid ingredient is dispersed into deionized water, and the operation in which the solid ingredient is filtered off by suction filtration is repeated until the conductivity of the filtrate reaches 200 μS/cm or less. An anion-modified cellulose fiber can be obtained by carrying out dehydration treatment against the resulting solid ingredient.

[Preparation of Suspension of Shortened Anion-modified cellulose fiber]

Fiber-shortening treatment was carried out against the anion-modified cellulose fiber having the physical property values given in Table 1, and the suspension of the shortened anion-modified cellulose fiber having physical property values given in Table 2 was prepared. Such a shortened anion-modified cellulose fiber was used as a raw material for a modified cellulose fiber.

[Table 2]

Table 2

| | | Suspension of shortened anion-modified cellulose fiber | |
|---|---|---|---|
| | | 1 | 2 |
| Shortened anion-modified cellulose fiber | Average fiber diameter | 28 μm | 26 μm |
| | Average fiber length | 130 μm | 311 μm |
| | Carboxy group content | 1.35 mmol/g | 1.74 mmol/g |
| | Crystallinity | 75% | 66% |
| Solvent | | water | PGME |
| Glucose moiety content in suspension | | 25.0% by mass | 16.5% by mass |

Incidentally, the solid ingredient content in the above suspension was considered as a glucose moiety content in the suspension, because the glucose moiety content in the suspension was before the amidation reaction.

(Suspension of Shortened Anion-modified cellulose fiber 1)

The shortened anion-modified cellulose fiber 1 can be prepared by the following method.

The suspension of the anion-modified cellulose fiber having the physical property values given in Table 1 in solid ingredient amount of 144.5 g is diluted with 1000 g of deionized water, and 1.4 g of 35% hydrogen peroxide (one part by mass of hydrogen peroxide based on 100 parts by mass of solid ingredient amount of the raw material cellulose fiber) are added thereto, and the pH is adjusted to pH 12 with aqueous 1M sodium hydroxide solution. Next, an alkaline hydrolysis treatment is carried out at 80°C for 2 hours (4.3% by mass of the solid ingredient content in the suspension of the anion-modified cellulose fiber). After the suspension is cooled to an ambient temperature, the solid ingredient is filtered off by suction filtration. The solid ingredient is dispersed in the deionized water, and the operation in which the solid ingredient is filtered off by suction filtration is repeated until the conductivity of the filtrate reaches 200 μS/cm or less. Deionized water is added to the suspension such that the solid ingredient content in the suspension is 5% by mass, and the mixture is stirred at 95°C for 12 hours, and thereafter, the mixture is cooled to an ambient temperature. The suspension of the shortened anion-modified cellulose fiber 1 given in Table 2 can be obtained by centrifuging the resulting suspension and removing the supernatant.

(Suspension of Shortened Anion-modified cellulose fiber 2)

Deionized water was added to the suspension of the anion-modified cellulose fiber having the physical property values given in Table 1 such that the solid ingredient content in the suspension is 5% by mass, and the mixture was stirred at 95°C for 24 hours, and thereafter, the mixture was cooled to 25°C. The supernatant was removed by centrifuging (manufactured by Hitachi Koki Holdings Co., Ltd., CR21G III, centrifugal acceleration: 10000 G, 1 minute, hereinafter same condition) the resulting water-suspension. Water in an amount of 840 g was added to 160 g of suspension obtained by removing the supernatant to adjust the solid ingredient content in the mixture to 4% by mass, and the mixture was stirred for 3 hours. To the mixture 4 g of sodium borohydride was added, the mixture was stirred for 3 hours, and the supernatant was removed by centrifugation. Further, 360 g of water was added to the resulting precipitation, and the operation in which the supernatant was removed by centrifugation was repeated three times, to provide water-suspension of the shortened anion-modified cellulose fiber of which solid ingredient content was 23.8% by mass.

Thirty grams of 1-methoxy-2-propanol (PGME) were added to 6.3 g of water-suspension and the mixture was suspended, and the supernatant was removed by centrifugation. Further, 30 g of PGME was added to the resulting precipitation and the mixture was suspended, and the operation in which the supernatant was removed by centrifugation was repeated three times, to provide a suspension of the shortened anion-modified cellulose fiber 2 of which solid ingredient content was 16.5% by mass.

Examples 1 and 2, and Comparative Example 1

(First Amidation Reaction)

To a beaker equipped with a magnetic stirrer and a stirrer bar, 6.0 g of the suspension of shortened anion-modified cellulose fiber 1 given in Table 3 or 4, 1 equivalent of first amine given in Table 3 or 4 based on the carboxy group of the shortened anion-modified cellulose fiber, 1 equivalent of 4-(4,6-dimethoxy-1,3,5-triazine-2-yl)-4-methylmorpholinium chloride (DMTMM) as a condensing agent, and 0.5 equivalent of N-methylmorpholine (NMM) as a catalyst were charged, and further 24 g of PGME was charged, to provide a mixture. The content of the anion-modified cellulose fiber (i.e. glucose moiety itself) in the mixture (i.e. in the reaction liquid at the beginning of the modifying step) was 5.0% by mass.

The resulting mixture was stirred at 25°C for 16 hours, to carry out first amidation reaction. The supernatant was removed from the resulting mixture by centrifugation after termination of the reaction to provide a suspension.

(First Purification)

To the suspension obtained in the first amidation reaction, 30 g of aqueous 0.1 M hydrochloride solution was added and the mixture was suspended, and the supernatant was removed by centrifugation to remove unreacted amine. Further, 30 g of methyl ethyl ketone (MEK) was added to the resulting suspension and the mixture was suspended, the operation in which the supernatant was removed by centrifugation was repeated three times, to provide a suspension of the modified cellulose fiber in which a first amine was bonded to an anion-modified cellulose fiber via an amide bond.

(Second Amidation Reaction)

To a beaker equipped with a magnetic stirrer and a stirrer bar, MEK suspension of the modified cellulose fiber after first purification, 1 equivalent of amine given in Table 3 or 4 based on the total of an amount of a carboxy group and an amount of an amide group of the modified cellulose fiber charged as a raw material of the second amidation reaction, 1 equivalent of DMTMM and 0.5 equivalent of NMM were charged, and further MEK was added until the content of the glucose moiety in the mixture reached 5.0% by mass. Here, the total of the amount of carboxy group and the amount of amide group of the modified cellulose fiber was calculated, provided that all the reacted carboxy group were changed to amide groups in the first amidation reaction.

The resulting mixture was stirred at 25°C for 16 hours, to carry out second amidation reaction. The supernatant was removed from the resulting mixture by centrifugation after termination of the reaction to provide a suspension.

(Second Purification)

To the suspension resulting in the second amidation reaction, 30 g of aqueous 0.1 M hydrochloride solution was added and the mixture was suspended, and the supernatant was removed by centrifugation. Further, 30 g of PGME was added to the resulting suspension and the mixture was suspended, and the mixture was washed by repeating the operation in which the supernatant was removed by centrifugation three times, to provide a suspension of the modified cellulose fiber in which two kinds of amines are bonded to an anion-modified cellulose fiber via an amide bond.

(Fine Fibrillation Treatment)

The suspension of the modified cellulose fiber obtained by the second purification was diluted with PGME, and the solid ingredient content of the resulting suspension was confirmed. Next, the suspension and PGME were mixed such that the suspension contained the modified cellulose fiber (1 g as a glucose moiety), 49.5 g of PGME. To this mixture, 49.5 g of epoxy resin was added. The resulting mixture was subjected to the dispersion treatment at 150 MPa five times using high-pressure homogenizer, to provide an epoxy resin PGME solution dispersion of the fine modified cellulose fiber of which the content of the glucose moiety was 1% by mass.

Comparative Example 2

An epoxy resin PGME solution dispersion of the modified cellulose fiber of which the content of the glucose moiety was 1% by mass was obtained by the same procedure as that of Comparative Example 1, except that the second amidation reaction and the second purification were not carried out, and the suspension of the modified cellulose fiber obtained after the first purification was subjected to fine fibrillation treatment in Comparative Example 1.

Comparative Example 3

An epoxy resin PGME solution dispersion of the modified cellulose fiber of which the content of the glucose moiety was 1% by mass was obtained by the same procedure as that of Example 2, except that the second amidation reaction and the second purification were not carried out, and the suspension of the modified cellulose fiber obtained after the first purification was subjected to fine fibrillation treatment in Example 2.

Comparative Example 4

An epoxy resin DMF solution dispersion of the modified cellulose fiber of which the content of the glucose moiety was 1% by mass was obtained by the same procedure as that of Comparative Example 3, except that N,N-dimethyl formamide (DMF) was used instead of PGME during the fine fibrillation treatment in Comparative Example 3.

Example 3

(First Amidation Reaction)

The first amidation reaction was carried out by the same method as the first amidation reaction of Example 1, except that the first amine was changed to that of Table 3. The supernatant was removed by centrifugation from the mixture obtained after termination of the reaction to provide a suspension.

(First Purification)

The same procedure as that of the first purification of Example 1 was carried out, except that PGME was used instead of MEK, to provide PGME suspension of the modified cellulose fiber in which first amine was bonded to an anion-modified cellulose fiber via an amide bond.

(Second Amidation Reaction)

The second amidation reaction was carried out to provide a suspension in the same condition as that of the method described in Example 1, except that PGME suspension of the modified cellulose fiber after the first purification, second amine given in Table 3 and PGME instead of MEK were used as a raw material of the second amidation reaction.

(Second Purification)

The same procedure as the second purification of Example 1 was carried out, except that DMF was used instead of PGME to the precipitation obtained by removing the supernatant by a centrifugation after termination of reaction, to provide a suspension of the modified cellulose fiber in which two kinds of amines were bonded to an anion-modified cellulose fiber via an amide bond.

(Fine Fibrillation Treatment)

The same procedure as the second purification of Example 1 was carried out, except that DMF was used instead of PGME to the suspension of the modified cellulose fiber obtained by the second purification, to provide an epoxy resin DMF solution dispersion of the fine modified cellulose fiber of which the content of the glucose moiety was 1% by mass.

Example 4

The first amidation reaction, the first purification, the second amidation reaction, the second purification and the fine fibrillation treatment were carried out by the same method as those of Example 1, except that MEK was used instead of PGME during the first amidation reaction in Example 1, and that the first amine was changed to that given in Table 3, to provide an epoxy resin PGME solution dispersion of the modified cellulose fiber of which the content of the glucose moiety was 1% by mass.

Comparative Example 5

The first amidation reaction, the first purification, the second amidation reaction, the second purification and the fine fibrillation treatment were carried out by the same method as those of Example 1, except that MEK was used instead of PGME during the first amidation reaction in Example 1, and that first and second amines were changed to those given in Table 4, to provide an epoxy resin PGME solution dispersion of the modified cellulose fiber of which the content of the glucose moiety was 1% by mass.

Comparative Example 6

An epoxy resin PGME solution dispersion of the modified cellulose fiber of which the content of the glucose moiety was 1% by mass was obtained by the same procedure as that of Example 4, except that the second amidation reaction and the second purification were not carried out in Example 4, and the suspension of the modified cellulose fiber obtained after the first purification was subjected to the fine fibrillation treatment.

Example 5

(First Amidation Reaction)

The first amidation reaction was carried out by the same method as the first amidation reaction of Example 1, except that the first amine was changed to that of Table 3, and that the 9.1 g of suspension of the shortened anion-modified cellulose fiber 2 were used. The supernatant was removed from the mixture obtained after termination of the reaction by centrifugation, to provide a suspension.

(First Purification)

DMF suspension of the modified cellulose fiber in which first amine was bonded to an anion-modified cellulose fiber via an amide bond was obtained by carrying out the same procedure as the first purification of Example 1, except that DMF was used instead of MEK.

(Second Amidation Reaction)

The second amidation reaction was carried out in the same condition as the method described in Example 1, except that DMF suspension of the modified cellulose fiber after the first purification, second amine given in Table 3 and DMF instead of MEK were used as raw materials of the second amidation reaction, to provide a suspension.

(Second Purification)

A suspension of the modified cellulose fiber in which two kinds of amines were bonded to the anion-modified cellulose fiber via an amide bond was obtained by carrying out the same procedure as the second purification of Example 1, except that acetone was used instead of PGME to the precipitation obtained by removing the supernatant by centrifugation after termination of the reaction.

(Fine Fibrillation Treatment)

The suspension of the modified cellulose fiber obtained in the second purification was diluted with acetone, and the content of the glucose moiety of the resulting suspension was confirmed. The suspension and acetone were mixed such that the suspension contained modified cellulose fiber (1 g as a glucose moiety) and 999 g of acetone. The resulting suspension was subjected to a dispersion treatment five times with a high-pressure homogenizer NanoVater L-ES, manufactured by YOSHIDA KIKAI CO., LTD. at 150 MPa, to provide an acetone dispersion of the modified cellulose fiber. To the resulting dispersion, 99 g of thiol compounds were added, and the mixture was stirred for 10 minutes.

The resulting dispersion was filled into an eggplant shaped flask, and the eggplant shaped flask was heated with a water bath at 90°C, the eggplant shaped flask was stirred using a rotary evaporator, and acetone was removed under the condition of the absolute pressure of 2 kPa, to provide a thiol compound dispersion of the fine modified cellulose fiber of which the content of the glucose moiety was 1% by mass.

Comparative Example 7

(Fine Fibrillation Treatment)

To water suspension of the anion-modified cellulose fiber 1 having physical property values given in Table 1, 10577 g of deionized water was added, to provide water suspension of which solid ingredient content was 0.5% by mass. To this water suspension, 1 equivalent of sodium hydroxide was added based on the carboxy group of the anion-modified cellulose fiber. The resulting water suspension was subjected to a dispersion treatment two times with a high-pressure homogenizer NanoVater L-ES, manufactured by YOSHIDA KIKAI CO., LTD. at 150 MPa, to provide water suspension of the fine anion-modified cellulose fiber.

Subsequently, 245 g of aqueous 1 M hydrochloride solution was charged under ambient temperature, and the content was reacted for 1 hour. After termination of reaction, the reaction product was reprecipitated with acetone, filtrated, and thereafter, the filtrated product was washed with acetone/deionized water (mass ratio : 1/1), to remove hydrochloride and salts. Finally, PGME was added to the product and the mixture was filtrated, to provide a precipitation of fine anion-modified cellulose fiber (the content of the anion-modified cellulose fiber of 5.0% by mass). The average fiber diameter of the fine anion-modified cellulose fiber contained in the precipitation was 3 nm, and the average fiber length was 600 nm.

(Amidation Reaction)

A mixture of the fine anion-modified cellulose fiber of which the content of the glucose moiety was 5.0% by mass was prepared under the same condition as the first amidation reaction of Example 1, except that the precipitation of the fine anion-modified cellulose fiber was used instead of the suspension of the shortened anion-modified cellulose fiber, and that PGME was not charged. However, the reaction liquid was gelated upon mixing, and it was impossible to stir the reaction liquid. Therefore, the amidation reaction could not be completed.

Main reaction conditions and results were summarized in Tables 3 and 4.

[Table 3]

Table 3

| | | Ex. 1 | Ex. 2 | Ex. 3 | Ex. 4 | Ex. 5 |
|---|---|---|---|---|---|---|
| Content of anion-modified cellulose fiber in reaction liquid at beginning of modifying step (% by mass) | | 5.0 | 5.0 | 5.0 | 5.0 | 5.0 |
| First amidation reaction | Suspension of shortened anion-modified cellulose fiber* | 1 (28 μm) | 1 (28 μm) | 1 (28 μm) | 1 (28 μm) | 2 (26 μm) |
| | First amine | Octylamine | Benzylamine | Benzylamine | EOPO amine 3 | Diphenylpropylamine |
| | Molecular weight of first amine | 129.24 | 107.15 | 107.15 | 1000 | 211.31 |
| Introduction rate of modifying group at termination of first amidation reaction (% by mol) | | 71 | 67 | 72 | 60 | 30 |
| Second amidation reaction | Second amine | EOPO amine 1 | EOPO amine 1 | Diphenylpropylamine | EOPO amine 1 | EOPO amine 2 |
| | Molecular weight of second amine | 2000 | 2000 | 211.31 | 2000 | 3000 |
| Introduction rate of modifying group at termination of second amidation reaction (% by mol) | | 85 | 87 | 87 | 90 | 82 |
| Increment of introduction rate at second amidation reaction (%) | | 14 | 20 | 15 | 30 | 52 |
| [Second amine molecular weight]/[First amine molecular weight] | | 15.5 | 18.7 | 1.97 | 2 | 14.2 |
| Fine modified cellulose fiber | Average fiber length (nm) | 200 | 200 | 200 | 200 | 220 |
| | Average fiber diameter (nm) | 5 | 5 | 5 | 5 | 3 |
| Dispersion | Dispersion medium | Epoxy resin PGME solution | Epoxy resin PGME solution | Epoxy resin DMF solution | Epoxy resin PGME solution | Thiol compound |
| | Transmittance (%) | 91 | 82 | 60 | 90 | 95 |

*: Values in parentheses are average fiber diameter.

[Table 4]

Table 4

| | | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|
| Content of anion-modified cellulose fiber in reaction liquid at beginning of modifying step (% by mass) | | 5.0 | 5.0 | 5.0 | 5.0 | 5.0 | 5.0 | 5.0 |
| First amidation reaction | Suspension of shortened anion-modified cellulose fiber* | 1 (28 μm) | 1 (28 μm) | 1 (28 μm) | 1 (28 μm) | 1 (28 μm) | 1 (28 μm) | Suspension of fine anion-modified cellulose fiber (3 nm) |
| | First amine | EOPO amine 1 | | Benzylamine | | EOPO amine 1 | EOPO amine 3 | Amidation reaction could not be achieved due to gelation during stirring. |
| | Molecular weight of first amine | 2000 | | 107.15 | | 2000 | 1000 | |
| Introduction rate of modifying group at termination of first amidation reaction (% by mol) | | 38 | 38 | 67 | 67 | 53 | 60 | |
| Second amidation reaction | Second amine | Octylamine | - | - | - | EOPO amine 3 | - | - |
| | Molecular weight of second amine | 129.24 | - | - | - | 1000 | - | - |
| Introduction rate of modifying group at termination of second amidation reaction (% by mol) | | 69 | 38 | - | - | 87 | - | - |
| Increment of introduction rate at second amidation reaction (%) | | 31 | - | - | - | 34 | - | - |
| [Second amine molecular weight]/[First amine molecular weight] | | 0.064 | - | - | - | 0.5 | - | - |
| Fine modified cellulose fiber | Average fiber length (nm) | 200 | 200 | 200 | 200 | 200 | 200 | - |
| | Average fiber diameter (nm) | 5 | 5 | 5 | 5 | 5 | 5 | - |
| Dispersion | Dispersion medium | Epoxy resin PGME solution | | | Epoxy resin DMF solution | Epoxy resin PGME solution | | - |
| | Transmittance (%) | 34 | 61 | 3.7 | 34 | 82 | 83 | - |

*: Values in parentheses are average fiber diameter.

It was found from Table 3 that a fine modified cellulose fiber with high transmittance, i.e. high dispersibility could be produced according to the production method of the present invention (Example 1 and Example 2).

On the other hand, it was found that in Comparative Example 1, a modified cellulose fiber was produced at first by carrying out modification using an amine having larger molecular weight, and then carrying out modification using an amine having smaller molecular weight, and consequently, the transmittance of the resulting dispersion was worse than those of Examples and that of Comparative Example 2 (an amine having larger molecular weight was used alone), and the dispersibility of the resulting fine modified cellulose fiber was low. Further, it was found that since the introduction rate of the modifying group was also lower than those of Examples, efficiency of amidation was also worse than those of Examples.

Further, it was found from Comparative Example 3 that reaction liquid was disadvantageously gelated by using an anion-modified cellulose fiber having an average fiber diameter of less than 1 μm, and an amine could not be amide bonded, so that the production itself of a modified cellulose fiber was extremely difficult. Here, a gelation did not occur by lowering the amount of anion-modified cellulose fiber in the reaction liquid. From the above, it was found that a modified cellulose fiber could be produced in high yield by selecting an anion-modified cellulose fiber having a given average fiber diameter and forming an amide bond.

The detail of each ingredient is as follows.

DMTMM: manufactured by Suzhou Highfine Biotech, 4-(4,6-dimethoxy-1,3,5-triazine-2-yl)-4-methylmorpholinium chloride
NMM; manufactured by FUJIFILM Wako Pure Chemical Corporation, N-methylmorpholine
Epoxy resin: manufactured by Mitsubishi Chemical Corporation, jER-828
Thiol compound: manufactured by FUJIFILM Wako Pure Chemical Corporation, pentaerythritol tetrakis(3-mercaptopropionate), molecular weight 488

• Amine

Octylamine: manufactured by FUJIFILM Wako Pure Chemical Corporation, molecular weight 129.24
Benzylamine: manufactured by FUJIFILM Wako Pure Chemical Corporation, molecular weight 107.15
Diphenylpropylamine: manufactured by FUJIFILM Wako Pure Chemical Corporation, molecular weight 211.31
EOPO amine 1: manufactured by HUNTSMAN International LLC, JEFFAMINE M2070, molecular weight 2000
EOPO amine 2: manufactured by HUNTSMAN International LLC, JEFFAMINE M3000, molecular weight 3000
EOPO amine 3: manufactured by HUNTSMAN International LLC, JEFFAMINE M1000, molecular weight 1000

INDUSTRIAL APPLICABILITY

A modified cellulose fiber and a fine modified cellulose fiber which are produced according to the production method of the present invention have high dispersibility, and can exhibit a mechanical strength-enhancing effect when formulated into a resin and molded, so that they can be suitably used as various fillers and the like. In addition, a resin composition in which a dispersion of the fine modified cellulose fiber is formulated can be suitably used in various industrial applications such as daily sundries, household electric appliance parts, a packaging material for household electric appliances and automobile parts.

## Claims

**1.** A method of producing a modified cellulose fiber comprising a modifying step in which two or more kinds of amines having different molecular weight are amide bonded to an anion-modified cellulose fiber, wherein:

an average fiber diameter of the anion-modified cellulose fiber is 1 μm or more and 100 μm or less, and
the method comprising carrying out the following Step 1 and subsequently the following Step 2 in the modifying step:

Step 1: an amine comprising an amine having smallest molecular weight is amide bonded to an anion-modified cellulose fiber; and
Step 2: after Step 1, an amine comprising an amine having largest molecular weight is amide bonded to an anion-modified cellulose fiber.

**2.** The method of producing a modified cellulose fiber according to claim 1, wherein an average fiber length of the anion-modified cellulose fiber is 1 μm or more and 1,000 μm or less.

**3.** The method of producing a modified cellulose fiber according to claim 1 or 2, wherein the anion-modified cellulose fiber has a carboxy group.

**4.** The method of producing a modified cellulose fiber according to any one of claims 1 to 3, wherein the content of the anion-modified cellulose fiber in a reaction liquid at the beginning of the modifying step is 1% by mass or more in the step.

**5.** The method of producing a modified cellulose fiber according to any one of claims 1 to 4, wherein the amine has one or more kinds of modifying groups selected from the group consisting of a hydrocarbon group and a polymer group.

**6.** The method of producing a modified cellulose fiber according to any one of claims 1 to 5, wherein the molecular weight of the amine having smallest molecular weight is 20 or more and 2,000 or less.

**7.** The method of producing a modified cellulose fiber according to any one of claims 1 to 6, wherein the molecular weight of the amine having largest molecular weight is 100 or more and 4,000 or less.

**8.** The method of producing a modified cellulose fiber according to any one of claims 1 to 7, wherein a molecular weight ratio of the amine having largest molecular weight to the amine having smallest molecular weight (a molecular weight of an amine having largest molecular weight / a molecular weight of an amine having smallest molecular weight) is more than 1 and 100 or less.

**9.** The method of producing a modified cellulose fiber according to any one of claims 5 to 8, wherein an introduction rate of the modifying group in the modified cellulose fiber is 40% by mol or more and 100% by mol or less.

**10.** The method of producing a modified cellulose fiber according to any one of claims 5 to 9, wherein an introduction rate of a modifying group having smallest molecular weight which is introduced by a bond of the amine having smallest molecular weight in the modifying group introduced into the modified cellulose fiber is 10% by mol or more and 95% by mol or less.

**11.** The method of producing a modified cellulose fiber according to any one of claims 1 to 10, wherein the amount of the amine in the Step 1 is 0.01 mol equivalent or more and 10 mol equivalent or less.

**12.** The method of producing a modified cellulose fiber according to any one of claims 1 to 11, wherein the amount of the amine in the Step 2 is 0.01 mol equivalent or more and 10 mol equivalent or less.

**13.** The method of producing a modified cellulose fiber according to any one of claims 5 to 12, wherein the polymer group is one or more kinds selected from the group consisting of a polyoxyalkylene structure and a polysiloxane structure.

**14.** The method of producing a modified cellulose fiber according to any one of claims 5 to 13, wherein the polymer group is a structure represented by the following formula:

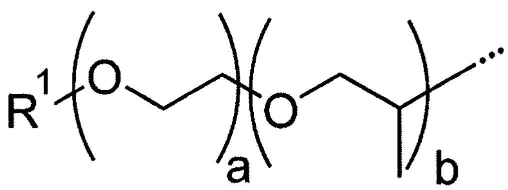

wherein $R^1$ represents a hydrogen atom, a hydrocarbon group having carbon atoms of 1 or more and 6 or less or $-CH_2CH(CH_3)NH_2$ group, EO and PO are present randomly or in a state of a block, a is a positive number showing an average number of moles of EO added, and b is a positive number showing an average number of moles of PO added.

**15.** A method of producing a fine modified cellulose fiber comprising finely fibrillating the modified cellulose fiber obtained by the method as defined in any one of claims 1 to 14.

**INTERNATIONAL SEARCH REPORT**

International application No.
**PCT/JP2024/009117**

**A. CLASSIFICATION OF SUBJECT MATTER**

***C08B 15/06***(2006.01)i; ***D06M 13/328***(2006.01)i
FI: C08B15/06; D06M13/328

According to International Patent Classification (IPC) or to both national classification and IPC

**B. FIELDS SEARCHED**

Minimum documentation searched (classification system followed by classification symbols)

C08B15/06; D06M13/328

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | WO 2015/098544 A1 (KAO CORPORATION) 02 July 2015 (2015-07-02) abstract, claims 1-14, 16, 21, 23, examples 2-1 to 2-6, paragraphs [0038], [0051], [0064], [0181]-[0182], [0250]-[0259], table 9 | 1-15 |
| A | WO 2018/030310 A1 (KAO CORPORATION) 15 February 2018 (2018-02-15) | 1-15 |
| A | US 4952684 A (DOMTAR INC.) 28 August 1990 (1990-08-28) | 1-15 |

☐ Further documents are listed in the continuation of Box C.
☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 May 2024** | **28 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/009117**

| Patent document cited in search report | Publication date (day/month/year) | Patent family member(s) | Publication date (day/month/year) |
|---|---|---|---|
| WO 2015/098544 A1 | 02 July 2015 | US 2016/0340827 A1<br>abstract, claims 1-14, 16, 21, 23, examples 2-1 to examples 2-6, paragraphs [0043], [0059]-[0060], [0074], [0209]-[0211], [0271]-[0282], table 9<br>EP 3088600 A1<br>CN 105121734 A<br>KR 10-2016-0096160 A<br>TW 201533062 A<br>CN 107620211 A<br>JP 2015-143337 A | |
| WO 2018/030310 A1 | 15 February 2018 | US 2019/0225712 A1<br>US 2023/0095911 A1<br>EP 3498736 A1<br>CN 109563177 A<br>KR 10-2019-0039083 A<br>TW 201815828 A<br>JP 2018-24967 A | |
| US 4952684 A | 28 August 1990 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015143337 A
- JP 2019119983 A
- JP 2015143336 A
- JP 3181448 A
- JP 6105139 B
- JP 2013151661 A